# EUROPÄISCHE PATENTSCHRIFT

(11) **EP 3 972 841 B1**
(45) Veröffentlichungstag und Bekanntmachung des Hinweises auf die Patenterteilung: **02.12.2026**
(21) Anmeldenummer: 20753751.5
(22) Anmeldetag: 07.08.2020
(51) Int. Cl.: B33Y 70/00, B29C 64/153, C08L 71/00

(54) **SELEKTIVES SINTERN VON POLYMERBASIERTEN VERBUNDWERKSTOFFEN**
SELECTIVE SINTERING OF POLYMER-BASED COMPOSITE MATERIALS
FRITTAGE SÉLECTIF DE MATÉRIAUX COMPOSITES À BASE DE POLYMÈRE

(30) Priorität: 16.08.2019 DE 102019212298
(43) Veröffentlichungstag der Anmeldung: 30.03.2022
(73) Patentinhaber: EOS GmbH Electro Optical Systems, 82152 Krailling (DE)
(72) Erfinder: PFISTER, Andreas, 90763 Fürth (DE); FISCHER, Sybille, 82223 Eichenau (DE); GALITZ, Verena, 82152 Krailling (DE)
(74) Vertreter: Prüfer & Partner mbB Patentanwälte · Rechtsanwälte
(86) Internationale Anmeldenummer: PCT/EP2020/072288
(87) Internationale Veröffentlichungsnummer: WO 2021/032511

(56) Entgegenhaltungen:
- EP-A1- 2 368 696
- EP-A1- 3 395 901
- EP-A1- 3 560 685
- WO-A1-2005/090448
- DE-A1- 102004 009 234

## Beschreibung

Die vorliegende Erfindung bezieht sich auf ein Pulvergemisch für die Verwendung als Aufbaumaterial zum Herstellen eines dreidimensionalen Objekts durch schichtweises Verfestigen des Aufbaumaterials an den dem Querschnitt des dreidimensionalen Objekts in der jeweiligen Schicht entsprechenden Stellen insbesondere durch Einwirkung von Strahlung. Des Weiteren ist Gegenstand der vorliegenden Erfindung ein Verfahren zum Herstellen des erfindungsgemäßen Pulvergemisches, ein aus dem erfindungsgemäßen Pulvergemisch hergestelltes dreidimensionales Objekt, insbesondere durch selektives Sintern mittels elektromagnetischer Strahlung, sowie die Verwendung des erfindungsgemäßen Pulvergemisches zur Herstellung besagten dreidimensionalen Objekts.

Die DE 10 2004 009234 A1 offenbart ein Pulvergemisch umfassend ein thermoplastisches Polyamidpulver, auf das Ruß aufgesprüht ist. Das Material weist eine Schüttdichte von 0,46 g/cm3 auf.

Wie beispielsweise aus der DE 44 10 046 bekannt ist, kann ein Verfahren zur Herstellung eines dreidimensionalen Objekts durch selektives Sintern mittels elektromagnetischer Strahlung mit Hilfe einer elektromagnetischen Strahlungsquelle schichtweise durchgeführt werden. In einem solchen Verfahren wird ein dreidimensionales Objekt schichtweise - nach dem Prinzip der "additiven Fertigung" - durch Auftragen von Pulverschichten und Verbinden dieser Schichten miteinander durch selektives Verfestigen des Pulvers an den den Querschnitten des Objekts entsprechenden Stellen hergestellt.

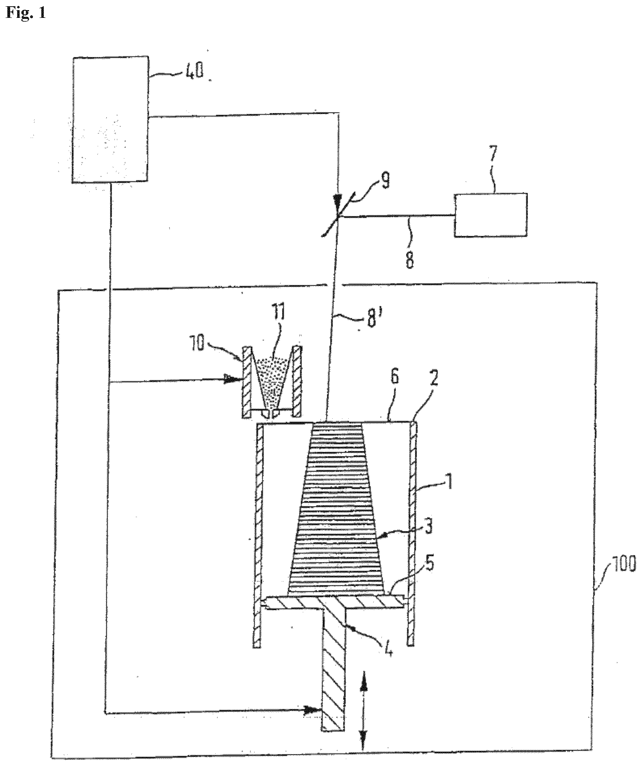

Fig. 1 zeigt beispielhaft eine Lasersintervorrichtung, anhand derer ein Verfahren zur schichtweisen Herstellung eines dreidimensionalen Objektes durchgeführt werden kann. Wie aus Fig. 1 ersichtlich ist, weist die Vorrichtung einen Behälter 1 auf. Dieser ist nach oben offen und nach unten durch einen Träger 4 zum Tragen eines zu bildenden Objektes 3 begrenzt. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren pulverförmigen Aufbaumaterial gebildet. Der Träger ist dabei über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt. Eine Steuereinheit 40 ermöglicht die Steuerung des Trägers 4, der Aufbringungsvorrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Verglichen mit dem oben beschriebenen System gibt es viele Modifikationen von Verfahren und Vorrichtungen zur Herstellung eines dreidimensionalen Objekts durch selektives Sintern mittels elektromagnetischer Strahlung, die ebenfalls verwendet werden können. Zum Beispiel könnten anstatt eines Lasers und/oder eines Lichtstrahls andere Systeme verwendet werden, um selektiv elektromagnetische Strahlung zu liefern, wie beispielsweise Masken-Belichtungssysteme, VCSEL-Belichtersystem mit Zeilenbelichter (z.B. P9), HP-Belichtungssystem mit Absorbertinte und Flächenheizung oder dergleichen.

Als Aufbaumaterial kommt häufig ein Pulver mit Pulverteilchen umfassend ein thermoplastisches Polymermaterial in Betracht. Die mechanischen Eigenschaften des hergestellten Objekts können durch geeignete Wahl des Polymers im Rohmaterial beeinflusst werden. So werden Polymere, die zu bevorzugten mechanischen Werkstoffeigenschaften im finalen Objekt führen, zum Beispiel in der DE 10 2008 024 281 A1 und DE 10 2008 024 288 A1 beschrieben, deren Inhalt zum Zwecke der Auswahl geeigneter Polymere in einer Ausführungsform der Erfindung als einbezogen gilt. Ebenso wurde beschrieben, dass die mechanischen Eigenschaften durch Verwendung von Füllstoffen weiter verbessert werden könnten. Beispielsweise könnten Kohlefasern, Glasfasern, Kevlar-Fasern, Carbon-Nanotubes, oder Füllstoffe, die ein geringes Aspektverhältnis (Glaskugeln, Aluminiumgries, etc.) oder mineralische Füllstoffe wie Titanoxid in das Polymer oder Copolymer-haltige Pulver eingearbeitet werden.

Ein großer Nachteil der bekannten, nach dem Prinzip der additiven Fertigung arbeitenden Sinterverfahren stellt die vergleichsweise hohe Kristallisationsneigung der thermoplastischen Polymermaterialien dar. Die Kristallinität ist typischerweise wesentlich größer als bei Objekten, die durch herkömmliche Polymerverarbeitungs-Technologien wie z.B. Spritzguss hergestellt werden. Das heißt, dass in einem Verfahren zur Herstellung eines dreidimensionalen Objekts aus Pulver durch selektives Sintern mittels elektromagnetischer Bestrahlung des Polymer-haltigen Pulvers, z.B. einer Ausführung wie sie in Fig. 1 dargestellt ist, die Kristallinität des hergestellten Objekts dazu tendiert, hoch zu sein.

Besonders beim schichtweisen Aufbauverfahren wird in der Regel eine hohe Pulverbetttemperatur, die etwa 1-50°C, bevorzugt 1-30°C, weiter bevorzugt 1-20°C und insbesondere 1-10°C unterhalb des Schmelzpunkts Tₘ des Polymers liegt, verwendet. Alternativ kann aber auch bei Temperaturen unterhalb der Kristallisationstemperatur und oberhalb der Glasübergangstemperatur gebaut werden, um eine geringe Kristallinität im Bauteil zu erzeugen, wobei zur Vermeidung von Verzugseffekten mit Stützstrukturen gearbeitet werden kann. Üblicherweise wird das Objekt für einen erheblichen Zeitraum relativ hohen Prozesstemperaturen ausgesetzt und durchläuft gewöhnlich noch sehr lange Abkühlzeiten. Ein signifikantes Problem stellt das sogenannte Curling dar, da dieser während des Prozesses so massiv auftreten kann, dass der gesamte Aufbauverfahrens sofort abgebrochen werden muss, weil beim nächsten Beschichtungsvorgang es zu massiven Bauteilverschiebungen und Zerstörung des Pulverbetts kommen kann. Um ein Curling des Objekts während des Aufbauverfahrens zu verhindern oder zu minimieren, sollte die Prozesstemperatur nahe am Schmelzpunkt des im Pulver enthaltenen Polymers gehalten werden, um für eine gute Verbindung zwischen den nachfolgenden Schichten zu sorgen und die Bildung von Poren aufgrund von einem unzureichenden Schmelzen der Pulverpartikel zu minimieren. Folglich wird die Temperatur des Pulverbetts während des gesamten Aufbauverfahrens üblicherweise mindestens bei, bevorzugt über der Kristallisationstemperatur Tₖ des Polymers gehalten. Das gebildete Objekt selbst kann für einen langen Zeitraum Temperaturen über Tₖ ausgesetzt sein. Am Ende des Aufbauverfahrens, wenn alle Heizquellen der Sintermaschine ausgeschaltet werden, beginnt das Kühlen über Tₖ des Objekts aufgrund von natürlichem Wärmeverlust an die Umgebung. Dies kann aufgrund der geringen Wärmeleitfähigkeit des Polymerpulvers und des großen Pulverbetts abhängig vom verwendeten Polymerpulver und den Verfahrensbedingungen, d.h. ohne eine geeignete Abkühlgeschwindigkeit festzulegen, Stunden bis Tage dauern, was unter Umständen die Kristallinität des Polymerobjekts während des Abkühlprozesses vergrößert.

Das Prozessfenster mit einer Vorheiztemperatur der Prozesskammer, bei der noch Prozesssicher gebaut werden kann, wird definiert durch die Differenz zwischen oberst möglicher Bautemperatur ("Aufschmelztemperatur"), bei der das Pulverbett gerade noch nicht beginnt aufzuschmelzen, und unterst möglicher Bautemperatur, bei der ein Curl gerade noch verhindert werden kann. Eine erhöhte Kristallisationsneigung führt zu einem verstärktem Bauteilcurl nach der Belichtung. Dadurch steigt die Wahrscheinlichkeit an, dass ein Bauteil durch den anschließenden Beschichtungsvorgang aus dem Pulverbett herausgerissen wird. Die untere Bauteiltemperatur wird daher durch diejenige Prozesskammertemperatur definiert, bei der durch den Beschichtungsvorgang gerade keine Bauteile herausgerissen werden ("Non-Curl Temperatur", Abk. NCT).

Daher ist eine Aufgabe der vorliegenden Erfindung, Mittel und Maßnahmen bereitzustellen, um dreidimensionale Objekte mit gewünschten Eigenschaften wie beispielsweise guten mechanischen Eigenschaften, insbesondere unter Berücksichtigung von an sich gegensätzlichen physiko-chemischen Parametern von Polymerpulvern, insbesondere mittels selektiven Sinterverfahren aber auch mittels anderer Verfahren der additiven Fertigung, mittels elektromagnetischer Strahlung, Wärme, Verkleben o.ä. herzustellen, wobei speziell und insbesondere bei Sinterverfahren eine sichere und risikoarme Betriebsweise, insbesondere im Hinblick auf das Curlingverhalten, ermöglicht werden soll.

Diese Aufgabe wird gelöst durch ein Pulvergemisch nach Anspruch 1, durch ein Verfahren nach Anspruch 10,12 durch ein dreidimensionales Objekt nach Anspruch 13 und eine Verwendung nach Anspruch 14. Weiterbildungen der Erfindung sind in den Unteransprüchen festgelegt.

Im Zuge Ihrer Forschungen fanden die Erfinder heraus, dass sich die ohnehin schon vergleichsweise hohe Kristallisationsneigung thermoplastischer Polymermaterialien durch Zugabe eines Verstärkungsstoffes so stark erhöhte, dass dadurch die Kristallisationstemperatur im Sinterverfahren beachtlich zunahm. Dies führen die Erfinder darauf zurück, dass ein Verstärkungsstoff, wie etwa für Verbundwerkstoffe (Komposite) fungierende Verstärkungsstoffe, in thermoplastischen Polymermaterialien als Nukleierungsmittel wirken können. Zwar konnte der erhöhten Kristallisationsneigung entgegengewirkt werden, indem die Vorheiztemperatur der Prozesskammer (untere Bautemperatur) erhöht wurde, allerdings war diese Lösung vor dem Hintergrund der nachfolgenden Beobachtungen nur bedingt zufriedenstellend.

Eine höhere Vorheiztemperatur ist bereits aus energetischer Sicht nachteilig. Des Weiteren kann es zu einer stärkeren Alterung (Erhöhung der Viskosität durch z.B. Vernetzung oder Kettenaufbau oder Degradation durch z.B. thermo-oxidativen Abbau und damit Viskositätsverringerung) des nicht versinterten Pulvers kommen. Dadurch kann sich die Auffrischrate des Pulvers verschlechtern (durch z.B. Vernetzung) oder aber die mechanischen Bauteileigenschaften verringern (durch z.B. Degradation). Zudem resultierte daraus ein kleineres Prozessfenster, was unerwünscht und für die Prozesssicherheit nachteilig ist. Aufgrund des kleineren Prozessfensters werden höhere Anforderungen an die Prozesskontrolle gestellt und erhöht sich das Risiko, dass der Prozess außerhalb des Prozessfensters läuft. Unterschreitet der Prozess die untere Bautemperatur, kann die erhöhte Kristallisationsneigung zu einem verstärkten Bauteilcurl nach der Belichtung führen.

Dadurch steigt die Wahrscheinlichkeit an, dass ein Bauteil durch den anschließenden Beschichtungsvorgang aus dem Pulverbett herausgerissen wird.

Es wurde beobachtet, dass durch Verwendung des erfindungsgemäßen Gemischs aus erstem und zweitem Pulver, im Vergleich zur Verwendung von nur einem Pulvertyp mit Füllstoff (d.h. der Füllstoff wie herkömmlich normal im gesamten, dem Bauprozess zugeführten Pulver verteilt ist), die Neigung zu Curl verringert war, und dass ferner die Kristallisationsneigung verringert war, was zu einem geringeren Bauteilverzug während des Bauvorgangs bzw. auch während des Abkühlprozess führte. Durch Verwendung des erfindungsgemäßen Pulvergemischs konnte auch der Nachteil herkömmlicher Füllstoffgefüllter Polymerpulver vermieden werden, bei denen die erhaltenen Bauteile im Hinblick auf Maßhaltigkeit und Dimensionsstabilität schlechter waren als bei Verwendung ungefüllter Polymerpulver.

Beispielsweise beobachteten die Erfinder, dass in bestimmten Fällen wie beispielsweise bei einem carbonfaserverstärktem PEKK Pulver (PEKK-CF) die Non-Curl Temperatur sogar höher als die obere Bautemperatur liegen kann. In DSC-analytischen Untersuchungen wurde festgestellt, dass es bei PEKK zu einer signifikant erhöhten Kristallisationsneigung und einem deutlichen Anstieg der Kristallisationsenthalpie gegenüber einem unverstärktem PEKK kommt. Dadurch war bei manchen PEKK-CF Pulvern keine prozesssichere Verarbeitung des faserverstärkten Pulvers im Laser Sinterprozess möglich.

Ferner wurden Zusammenhänge beobachtet, die bei Beachtung bestimmter Pulvercharakteristika und deren Werte zur Lösung des Problems beitragen, wenn es sich wie hier um ein Gemisch von Pulver handelt, deren verschiedene Pulverbestandteile (erstes und zweites Pulver) sich infolge des Eintrags von Füllstoff in hauptsächlich ein (erstes) Pulver unterscheiden: grundsätzlich sind die Pulvercharakteristika Schüttdichte und spezifische Oberfläche, die sich z.B. durch die spezifische BET-Oberfläche ausdrückt, unabhängig von Pulvergrößen, wie sie etwa durch eine gewisse gemittelte Durchschnittsgröße oder durch eine bestimmte Korngrößenverteilung definiert ist. Das heißt umgekehrt, dass aus einer bestimmten gemittelten Durchschnittsgröße oder einer bestimmten Korngrößenverteilung grundsätzlich nicht auf die Parameter Schüttdichte und/oder spezifische Oberfläche (BET-Oberfläche) geschlossen werden kann. Auswirkungen und Verhalten des Pulvers sind je nach Schüttdichte und spezifischer BET-Oberfläche einerseits und Durchschnittsgröße oder Korngrößenverteilung unterschiedlich. Erfindungsgemäß wurde nun als wichtig erkannt, dass - grundsätzlich unabhängig von Durchschnittsgröße bzw. Korngrößenverteilung - die Werte für die Schüttdichte und bevorzugt auch für die spezifische Oberfläche (BET-Oberfläche) für das gesamte Mischpulver in jeweils bestimmten Bereichen liegen; es reicht nicht aus, diese Parameter für jede Pulverart jeweils für sich zu betrachten, jedenfalls ohne Zusammenhang mit den jeweiligen Endwerten für die Mischung zu beachten. Diese Parameter und die damit zusammenhängenden Effekte werden nämlich infolge des Eintrags von Füllstoff in hauptsächlich eine Pulverart (hier in das erste Pulver) und gegebenenfalls den damit zusammenhängenden, noch weiteren Unterscheidungspunkten unterschiedlich beeinflusst und können unter Umständen im Ergebnis stark variieren. Speziell wurde in diesem Zusammenhang beobachtet, dass gerade beim Gesamtgemisch aus den wie oben beschriebenen ersten und zweiten Pulvern darauf zu achten ist, dass insgesamt und einheitlich die Schüttdichte im Bereich von 0,35 bis 0,70 g/cm³ liegt, und dass bevorzugt zusätzlich die mittels der BET-Methode definierte spezifische Oberfläche unter 10 m²/g liegt. Pulver, die aus Partikeln mit säulen- oder faserartiger Partikelform aufgebaut sind, oder Pulver mit relativ hohem Feinanteil, oder Pulvergemische, die solche Pulverbestandteile enthalten, neigen zum Beispiel dazu, insgesamt relativ niedrige Schüttdichtewerte zu haben. Ein ähnliches Verhalten ist auch bei Mahlpulvern zu erwarten, wenn nicht auf die gezielte Einhaltung der resultierenden Schüttdichte und der resultierenden BET-Oberfläche geachtet wird. Durch Vermahlung eines Polymers, insbesondere bei mehrfachem Mahlvorgang, können sich nämlich leicht entsprechende Feinanteile im Pulver ergeben. Bereits vorliegende säulen- oder faserförmige Pulver, oder durch die Vermahlung von Polymeren sich ausbildende fasrige Partikel können in (ggf. weiteren) Mahlgängen zu weiterem Feinanteil und damit zu relativ geringen Werten der Schüttdichte führen. Die Ausbildung von Feinanteil und/oder fasrigen Partikeln kann auch vom jeweils bearbeiteten Pulver-Polymertyp abhängen, und wird beispielsweise bei zähen oder spröden Polymeren oder bei Polyblends begünstigt. Anderseits ist eine hohe Schüttdichte von über 70 g/cm³ in Bezug auf die Masse von unversintertem Altpulver und somit bezüglich Wirtschaftlichkeit ungünstig. Wenn dann relativ mehr unversintertes Altpulver am Ende des Bauvorgangs erhalten wird, ist der Altpulver-Ausschuss bei Pulvern, die stark altern und bei denen somit eine schlechte Auffrischung vorliegt, hoch, was bei höherer Masse höhere Kosten verursacht. Es wird mehr Altpulver erzeugt, als für die neue Auffrischung benötigt wird. Das trifft vor allem bei Pulvern zu, die eine Auffrischrate von >20-30% Neupulver benötigen.

Wenn aber der erfindungsgemäße Bereich der Schüttdichte für das Gesamtpulver eingehalten wird, ist bei gleichzeitig guter Wirtschaftlichkeit die erhaltene Bauteilporosität niedrig, sind die mechanischen Eigenschaften des Bauteils insgesamt gut, und die erhaltenen Bauteile können Maßhaltigkeit und Dimensionsstabilität erfüllen. Überraschend führen die genannten Werte für Schüttdichte und spezifische BET-Oberfläche jeweils einzeln zu diesen gemeinsamen vorteilhaften Effekten. Die Wirkung wird noch signifikant gesteigert, wenn beide Parameterwerte in Kombination erfüllt sind. Zusätzlich können weitere spezifische Effekte durch jeweilige Parameter erzielt werden, etwa eine verbesserte Auffrischbarkeit und/oder ein größeres Prozessfenster (durch eine z.B. niedrigere untere mögliche Bautemperatur, der Non-Curl-Temperature = NCT) aufgrund einer besseren Wärmeleitfähigkeit durch die begrenzt niedrige BET-Oberfläche. In der kombinierten Beachtung beider Parameterbereiche gleicht somit die Verbesserung des Auffrischfaktors infolge der begrenzt niedrigen BET-Oberfläche das Problem einer potentiell hohen Masse an Altpulver aus, die sich sonst durch hohe Werte der Schüttdichte ergeben können.

Überraschenderweise konnten somit Anforderungen, die für sich genommen gegensätzlich sind, durch das erfindungsgemäße Pulvergemisch erfüllt und das zugrundeliegende Problem gelöst werden.

Gegenstand der vorliegenden Erfindung ist demnach ein Pulvergemisch, wobei das Pulvergemisch ein erstes Pulver und ein zweites Pulver enthält. Das erste Pulver enthält Pulverteilchen, die ein erstes thermoplastisches Polymermaterial und einen Verstärkungsstoff umfassen. Das zweite Pulver enthält Pulverteichen, die ein zweites thermoplastisches Polymermaterial enthalten, jedoch den im ersten Pulver enthaltenen Verstärkungsstoff nicht enthalten, im Wesentlichen nicht enthalten oder bis zu einem maximalen Anteil von 50 Gew.-% enthalten. Zudem ist darauf zu achten, dass das Pulvergemisch (d.h. die Mischung aus dem ersten Pulver und dem zweiten Pulver) eine Schüttdichte von 0,35 bis 0,70 g/cm³ hat. Vorteilhafterweise weist das Mischpulver ferner eine BET-Oberfläche von <10 m²/g auf. Die oben genannten gemeinsamen Effekte werden noch gesteigert, wenn die Schüttdichte mindestens 0,4 oder mindestens 0,42 oder mindestens 0,48 oder mindestens 0,50 oder mindestens 0,54 g/cm³, und/oder höchstens 0,65 oder höchstens 0,60 g/cm³, weiter bevorzugt mindestens 0,45 und insbesondere mindestens 0,5 g/cm³ und/oder höchstens 0,60 g/cm³ beträgt, und wenn vorzugsweise die BET <5 m²/g, weiter bevorzugt <3 m²/g und insbesondere <1 m²/g beträgt.

Die Vorteile der Erfindung werden wenigstens teilweise auch dann erreicht, wenn der Anteil des Verstärkungsstoffes in den Pulverteilchen des zweiten Pulvers deutlich niedriger ist als der Anteil des Verstärkungsstoffes in den Pulverteilchen des ersten Pulvers. Deshalb ist es im Rahmen der Erfindung auch möglich, dass die Pulverteilchen des zweiten Pulvers den in den Pulverteilchen des ersten Pulvers enthaltenen Verstärkungsstoff nur in einem Anteil von höchstens 50, vorzugsweise höchstens 40, höchstens 30, höchstens 25 und insbesondere höchstens 20, höchstens 15, höchstens 10 oder höchstens 5 Gew.-% bezogen auf den Anteil des Verstärkungsstoffes in den Pulverteilchen des ersten Pulvers enthält. Anstelle eines Verstärkungsstoffes können die Pulverteilchen des ersten Pulvers auch mehr als ein Verstärkungsstoff aufweisen.

Enthalten die Pulverteilchen des ersten Pulvers mehr als einen Verstärkungsstoff, so ist es in einer Ausführungsform der Erfindung bevorzugt, dass die Pulverteilchen des zweiten Pulvers keinen der im ersten Pulver enthaltenen Verstärkungsstoffe enthalten. Vorzugsweise enthalten die Pulverteilchen des zweiten Pulvers keinerlei Verstärkungsstoff(e). In einer weiteren Ausführungsform enthält das zweite Pulver (insgesamt betrachtet) keinerlei Verstärkungsstoff(e). Der einfacheren Lesbarkeit wegen wird in der vorliegenden Anmeldung und insbesondere im Folgenden der Begriff Verstärkungsstoff überwiegend im Singular verwendet und soll, sofern nicht anders angegeben oder aus dem Kontext ersichtlich, so verstanden werden, dass die jeweiligen Ausführungen sowohl für ein als auch für mehr als einen Verstärkungsstoff gelten.

In einer bevorzugten Ausführungsform ist der Verstärkungsstoff im Wesentlichen vollständig im Korn der Pulverteilchen des ersten Pulvers eingebettet bzw. inkorporiert. Dadurch werden die Vorteile der vorliegenden Erfindung am besten erreicht. Das bedeutet, dass der Verstärkungsstoff im Wesentlichen vollständig von dem Pulverteilchen umhüllt ist, insbesondere im Wesentlichen von einer Polymermatrix umschlossen ist, wie dies z.B. auch in der Patentanmeldung EP 1 660 566 dargestellt ist Der Begriff "im Wesentlichen" bedeutet in diesem Zusammenhang, dass die Oberfläche von wenigstens 50, vorzugsweise wenigstens 60, wenigstens 70 oder wenigstens 80 oder insbesondere gar wenigstens 90 Volumenprozent der Pulverteilchen des ersten Pulvers frei von (oberflächlich sichtbarem bzw. durch geeignete optische oder anderweitige Analyseverfahren feststellbarem) Verstärkungsstoff sind, und weiter bevorzugt keinen teilweise oder vollständig freiliegenden Verstärkungsstoff aufweisen. Alternativ oder zusätzlich kann der Verstärkungsstoff an der Oberfläche der Pulverteilchen des ersten Pulvers anhaften. Um den Verstärkungsstoff in das erste Pulver einzubetten bzw. zu inkorporieren, wird das erste Pulver bevorzugt durch Schmelz-Compoundierung mit anschließender Vermahlung, bevorzugt kryogener Vermahlung, durch Schmelz-Compoundierung und gleichzeitiges oder anschließendes Schmelze-Spinnen und Mikrogranulieren oder Schneiden des Faserstrangs, durch Schmelzdispergieren, durch Schmelzsprühen oder durch Fällung aus Lösungsmitteln hergestellt.

Schmelzdispergierung von Polymer kann mit z.B. wasserlöslichem dispergierenden Polymer wie z.B. Polyethylenglykol und Polyvinylalkohol erfolgen. Unter Herauswaschen des dispergierenden Polymers mit einem geeigneten Lösungsmittel wie Wasser werden im Wesentlichen sphärische Partikel erhalten. Für weitere Einzelheiten sei auf die Europäische Patentanmeldung 1 840 155 verwiesen. Eine weitere Möglichkeit stellt Schmelzdispergieren des Polymers mit einem geeignetem Blockcopolymer dar. Dabei werden unter Herauslösen des Blockcopolymers im Wesentlichen sphärische Partikel des Polymers erhalten. Für weitere Einzelheiten sei auf die Europäische Patentanmeldung 1 797 141 verwiesen. Der Verstärkungsstoff kann neben der eigentlich beabsichtigten Funktion die an sich problematische Eigenschaft aufweisen, die Kristallisationstemperatur des thermoplastischen Materials heraufzusetzen, beispielsweise um mindestens 2°C oder sogar um mindestens 5°C heraufzusetzen. Dem wirkt die vorliegende Erfindung entgegen.

In einem weiteren Aspekt der vorliegenden Erfindung, der auf ein besonderes, auf das Eincompoundieren von Verstärkungsstoff in das erste Pulver angepasstes Verfahren gerichtet ist, schließt dieses Verfahren die Schritte ein, dass das Polymermaterial geschmolzen wird und der mindestens eine Verstärkungsstoff in die Schmelze compoundiert/eingearbeitet wird, dann entweder noch während dieses Schritts des Compoundierens oder nach dem Eincompoundieren die den Verstärkungsstoff enthaltende Schmelze gesponnen wird, die resultierenden gesponnenen Fasern optional oder sogar bevorzugt gereckt werden und dann die den Verstärkungsstoff enthaltenden Fasern granuliert oder geschnitten werden. Optional kann das so granulierte bzw. geschnittene, den Verstärkungsstoff enthaltende Pulver in einem weiterer Schritt einer Verrundungsbehandlung unterzogen werden, um eine verbesserte, unten näher spezifizierte Korngrößenverteilung zu erhalten. Eine besonders geeignete Verrundungsbehandlung ist die in der PCT/EP2019/060398 beschriebene thermomechanische Behandlung des Pulvers.

Die Erfindung bezieht sich auch ein Verstärkungsstoff enthaltendes Polymerpulver, welches durch dieses besonders darauf angepasste Verfahren erhalten wurde.

Als Polymermaterial für dieses speziell angepasste Verfahren eignet sich das unten näher beschriebene thermoplastische Polymer. Dieses vorbeschriebene besondere Verfahren kann vorteilhaft angewandt werden, wenn Verstärkungsstoff in Pulver eincompoundiert wird, dessen Haupt-Polymerkomponente ein Polyaryletherketon (PAEK) ist, insbesondere aus der aus Polyetheretherketon (PEEK), Polyetherketonketon (PEKK), Polyetherketon (PEK), Polyetheretherketonketon (PEEKK), Polyetherketonetherketonketon (PEKEKK), Polyetheretheretherketon (PEEEK), Polyetheretherketon-Polyetherdiphenyletherketon (PEEK-PEDEK) und Copolymeren, die mindestens eines der vorgenannten Polymere einschließen, bestehenden Gruppe ausgewählt wird, vor allem wenn das Pulver-Polymer PEKK umfasst oder daraus besteht.

Das Gemisch aus erstem und zweitem Pulver kann im Vergleich zu einem entsprechenden Pulvergemisch ohne Verstärkungsstoff, oder im Vergleich zu einem ersten Pulver ohne Verstärkungsstoff, eine um mindestens 1 °C, vorzugsweise um mindestens 2 °C, weiter bevorzugt um mindestens 5 °C und insbesondere um mindestens 10 °C erniedrigte Kristallisationstemperatur und/oder eine um mindestens 1 J/g, vorzugsweise um mindestens 2 J/g, weiter bevorzugt um mindestens 5 J/g und insbesondere um mindestens 10 J/g erniedrigte Kristallisationsenthalpie aufweisen, jeweils ermittelt durch DSC (bestimmt gemäß DIN EN ISO 11357 mit 20°C/min Kühlrate).

Der Verstärkungsstoff ist über die Pulverteilchen - und dort wie beschrieben vorzugsweise im Wesentlichen im Korn - des ersten Pulvers vorzugsweise gleichmäßig verteilt. Weiter bevorzugt ist in mindestens 75 %, bevorzugt mindestens 80 %, weiter bevorzugt mindestens 85 %, insbesondere mindestens 90 % oder gar 95 % der Pulverteilchen des ersten Pulvers der Verstärkungsstoff enthalten. Idealerweise enthält im Wesentlichen jedes Pulverteilchen des ersten Pulvers den Verstärkungsstoff. Im erhaltenen Produkt, dem dreidimensionalen Bauteil, kann sich aus dem Umstand, dass im zweiten Pulver kein oder nur begrenzt Verstärkungsstoff enthalten ist, eine Ungleichverteilung des Verstärkungsstoffs ergeben, wie unten näher beschrieben.

Als Verstärkungsstoff wird hier ein Stoff bezeichnet, der bereits aufgrund dessen Produkteigenschaften an sich verstärkend wirkt, oder der durch seine mechanische Verstärkungswirkung, gegebenenfalls aufgrund von im Pulvergemisch vorliegender Konzentration bei Verwendung des Pulvergemisches als Aufbaumaterial zum Herstellen eines dreidimensionalen Objekts wie hier beschrieben zu einem höheren E-Modul und/oder einer höheren maximalen Zugfestigkeit und/oder einer geringeren Bruchdehnung im dreidimensionalen Objekt führt, wobei die jeweils genannte Veränderung vorzugsweise mindestens 5%, weiter bevorzugt mindestens 10% und insbesondere mindestens 15% beträgt, jeweils im Vergleich zu einem entsprechenden Pulvergemisch und daraus auf identische Weise hergestellten dreidimensionalem Objekt, das frei von diesem Verstärkungsstoff ist.

In einer bevorzugten Ausführungsform ist der Verstärkungsstoff im Wesentlichen partikulär, plättchenförmig und/oder faserförmig. Aufgrund der Tendenz derartig ausgebildeter Stoffe als Nukleierungsmittel zu wirken, kann die Erfindung in diesem Fall besonders gut genutzt werden.

Bei dem Verstärkungsstoff handelt es sich vorzugsweise um einen Stoff, der bereits aufgrund dessen Produkteigenschaften an sich verstärkend wirkt, insbesondere ausgewählt aus der Gruppe bestehend aus Kohlefasern, Glasfasern, Kevlar-Fasern, Carbon-Nanotubes, oder Verstärkungsstoffe, die ein geringes Aspektverhältnis wie Glaskugeln, Aluminiumgries und dergleichen haben. Weitere Verstärkungsstoffe sind partikuläre und insbesondere sphärische Füllstoffe oder unregelmäßig geformte Füllstoffe mit einem geringem Aspektverhältnis, vorzugsweise anorganische und mineralische. Bevorzugte Füllstoffe sind an anderer Stelle beschrieben. Auch Flammschutzmittel können verstärkend wie hier beschrieben wirken, insbesondere wenn sie in einer Konzentration von 20 bis 60 Gewichtsprozent vorliegen. Bevorzugte Flammschutzmittel sind an anderer Stelle beschrieben.

In einer weiter bevorzugten Ausführungsform enthält der Verstärkungsstoff Fasern oder ist allein durch Fasern gebildet. Geeignete Faserdurchmesser liegen zwischen 1 und 50 µm, bevorzugt bei mindestens 2 und/oder höchstens 20 µm, weiter bevorzugt bei mindestens 3 und/oder höchstens 10 µm und insbesondere bei mindestens 5 und/oder höchstens 7 µm. Aber auch außerhalb der vorgenannten Bereiche kann der Faserdurchmesser liegen, ohne dass von den besonderen Vorteilen der vorliegenden Erfindung abgewichen wird. Bevorzugte Fasern sind Carbonfasern, organische Fasern, insbesondere Aramidfasern, anorganische Fasern, insbesondere Glasfasern, Borfasern, Asbestfasern und/oder Wollastonitfasern. Unterschiedliche Fasertypen können miteinander kombiniert werden.

Zusätzlich oder alternativ zu Fasern kann der Verstärkungsstoff Nanoröhrchen, insbesondere Kohlenstoffnanoröhrchen enthalten. Kohlenstoffnanoröhren (Englisch: carbon nanotubes, CNT) sind mikroskopisch kleine röhrenförmige Gebilde (molekulare Nanoröhren) aus Kohlenstoff. Zusätzlich oder alternativ zu Fasern und/oder Nanoröhrchen kann der Verstärkungsstoff Graphit-Nanoplättchen und/oder Fullerene und/oder plättchenförmige Verstärkungsstoffe wie Schichtsilikate (z.B. Aluminiumsilikate) oder Whisker umfassen.

Das erfindungsgemäße Pulvergemisch soll insbesondere als Aufbaumaterial in dem hier beschriebenen erfindungsgemäßen Verfahren zum Herstellen eines dreidimensionalen Objekts Verwendung finden. Neben dem Laser-Sintern ist das erfindungsgemäße Pulvergemisch insbesondere auch für Freistrahl-Bindemittelauftrag (engl. binder jetting), und High Speed Sintering Verfahren (HSS), wie bspw. dem Multi Jet Fusion-Verfahren und anderen pulverbettbasierten Schmelzeverfahren geeignet, bei dem im Wesentlichen mittels Auftrag von Tinten oder Absorbern zur Aktivierung und/oder Inhibierung selektiv Bereiche des Pulverbetts mit Infrarotheizstrahlern aufgeschmolzen werden können

Die erfindungsgemäßen Vorteile und Ausführungsformen werden nachfolgend weiter verdeutlicht.

Das erfindungsgemäße Pulvergemisch führt in den daraus hergestellten dreidimensionalen Objekten zu einer merklichen Verbesserung von bestimmten, sehr vorteilhaften mechanischen Eigenschaften, die hohe Steifigkeit, hohe Druckfestigkeit, hohe Schlagzähigkeit, hohe maximale Zugfestigkeit, Biegefestigkeit, hohe Bruchdehnung und/oder hohe Wärmeformbeständigkeit einschließen und ausgewogen - trotz gegensätzlicher Wirkeffekte - kombinieren, ohne aber darauf beschränkt zu sein, während andererseits weitere gegenläufige Eigenschaften wie geringes Curlingverhalten gleichwohl gut ausgewogen sind. Überraschend ist erfindungsgemäß eine ausgewogene Kombination von an sich teilweise gegensätzlichen Eigenschaften des erhaltenen dreidimensionalen Objekts sowie von prozessualen Bedingungen bei dessen Herstellung erzielbar, wie es im Vergleich dazu (bei ansonsten gleichen Materialien und Bedingungen) nicht möglich ist mit einem Einsatz von "reinem" Pulver oder von Pulver, bei dem der Verstärkungsstoff dem gesamten Pulver z.B. als Dry-Blend beigemischt wird. Beispielsweise sind die Gesamteigenschaften und Prozessbedingungen beim Einsatz der erfindungsgemäßen Kombination von erstem und zweitem Pulver signifikant besser als bei einem entsprechenden Pulver, das keine Anteile von unverstärktem Pulver enthält ("reines Komposit"), oder bei vollständig unverstärktem Pulver, oder auch verglichen mit einer bloßen Trockenmischung (Dry Blend) von unverstärktem Pulver und Verstärkungsstoff.

So führt das erfindungsgemäße Pulvergemisch überraschend zu einer Absenkung der unteren Bautemperatur und einer Vergrößerung des Prozessfensters im Vergleich zu einem Pulver, das keine Anteile von unverstärktem Pulver enthält. Das Prozessfenster ist definiert durch die Differenz zwischen oberst möglicher Bautemperatur und unterst möglicher Bautemperatur in einem vordefinierten Verfahren zum Herstellen eines dreidimensionalen Objekts durch schichtweises Verfestigen eines pulverförmigen Aufbaumaterials an den dem Querschnitt des dreidimensionalen Objekts in der jeweiligen Schicht entsprechenden Stellen durch Einwirkung von Strahlung. Vorzugsweise wird die unterst mögliche Bautemperatur des Pulvergemischs, verglichen mit einer in einer Referenzmessung ermittelten unterst möglichen Bautemperatur des ersten, den Verstärkungsstoff enthaltenden Pulvers allein, um 1°C, bevorzugt 2°C, weiter bevorzugt 3°C, weiter bevorzugt 4°C, weiter bevorzugt 5°C, weiter bevorzugt 6°C, weiter bevorzugt 7°C, weiter bevorzugt 8°C, weiter bevorzugt 9°C und weiter bevorzugt 10°C verringert. In Ausführungsformen, in denen die oberst mögliche Bautemperatur (UBT = "upper building temperature) beibehalten wird (bspw. Polyamid, insbesondere PA11), wird das Prozessfenster um den entsprechenden Temperaturbetrag erweitert bzw. vergrößert. In anderen Ausführungsformen wird zwar die oberst mögliche Bautemperatur (UBT) ebenfalls abgesenkt, aber nicht im gleichen Maße wie die Non-Curl Temperatur. Dadurch kann bei einer Prozesskammertemperatur gebaut werden, die Bauteile mit guter Maßhaltigkeit und guten mechanischen Eigenschaften liefert. Überraschenderweise kann eine maximale Zugfestigkeit (UTS) erreicht werden, die die Zugfestigkeit des 3D-Objekts, welches aus "reinem" Kompositpulver als Aufbaumaterial gebildet wird, übertrifft. Ferner ist der Prozess sicherer und insbesondere das Curlingrisiko niedriger.

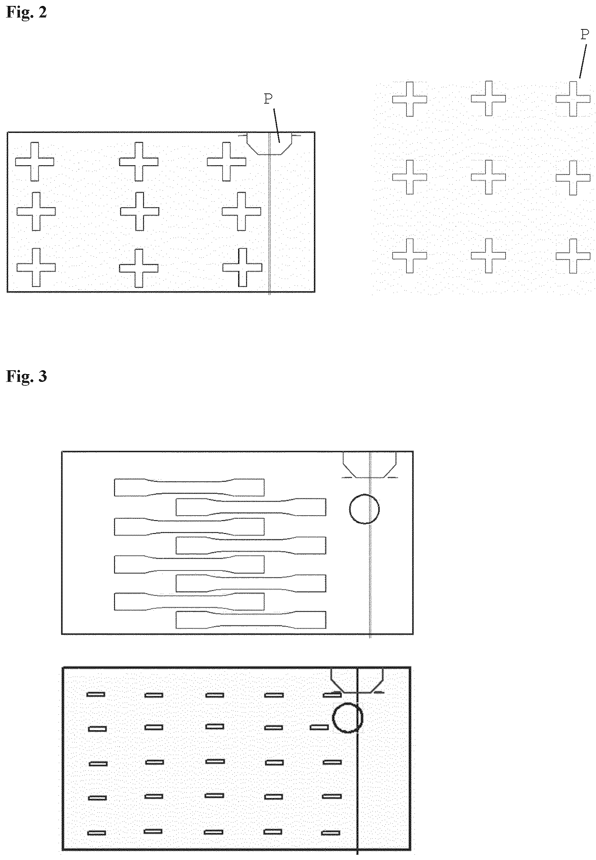

Die Absenkung der Non-Curl-Temperatur kann mittels eines Prozesstests direkt bestimmt werden. Hierzu werden dreidimensionale Kreuze innerhalb der xy-Bauebene homogen verteilt (vgl. Fig. 2). Die Bautemperatur in der Maschine zur Additiven Fertigung wird zu Beginn auf ca. 10°C unterhalb der erwarteten Non-Curl Temperatur eingestellt und die Anzahl der Kreuze notiert, welche bei dieser Bautemperatur noch einen starken Curl aufweisen. Die Bautemperatur wird sukzessive erhöht, bis kein Kreuz mehr ein prozesskritisches Curlverhalten aufweist und alle Kreuze prozesssicher gebaut werden können. Die Prozessparameter werden dabei vorzugsweise zwischen den verschiedenen Pulvermischungen konstant gehalten; für das Laser-Sintern auf EOS Maschinen beispielsweise kann dies im default.job der Systemsoftware PSW oder EOSPrint festgelegt werden, etwa in Bezug auf Heizungsparameter, Belichtungsparameter und Beschichtungsparameter.

Faserverstärkte Kompositpulver, bei denen der Verstärkungsstoff durch den Herstellprozess für das erste Pulver im Pulverkorn durch Einbetten bzw. Inkorporieren vorliegt, haben den Vorteil, dass es beim Beschichtungsprozess zu deutlich verringerter Vorzugsrichtung der Fasern in Beschichtungsrichtung kommt. Dadurch werden Bauteile mit deutlich isotroperen Bauteileigenschaften (insbesondere in Bezug auf den E-Modul) in xyz-Richtung erhalten, als dies bei einer Trockenmischung (Dry Blend) aus Faser und Thermoplastpulver der Fall wäre. Nachteilig bei "reinen" Faser-in-Korn Kompositen ist allerdings, dass Schmelzviskosität und Oberflächenspannung des Pulverkorns deutlich höher liegen, wodurch sich ein qualitativ schlechterer und rauerer Schmelzfilm beim Aufschmelzen durch die Belichtungseinheit ausbildet.

Das erfindungsgemäße Pulvergemisch zeichnet sich ferner überraschenderweise dadurch aus, dass daraus ein Objekt hergestellt werden kann, welches isotrope Bauteileigenschaften und dennoch einen guten Auffrischfaktor aufweist. Dieser Vorteil wird durch Trockenmischen des ersten und zweiten Pulvers erreicht. Eine Trockenmischung (Dry Blend) führt zu einer verbesserten Verfestigung und weniger Einfallstellen durch einen glatteren Schmelzefilm. Außerdem wird eine verbesserte Auffrischbarkeit erzielt, da bei niedrigerer Bauraumtemperatur gebaut werden kann. Bei niedrigeren Temperaturen findet eine geringere thermische Alterung des Pulvers statt (siehe Ergebnisse von Ausführungsbeispiel 1). Darüber hinaus kann ein besseres Verfließen des Materials aber eben auch bedeuten, dass mit älterem Material trotzdem noch gut und ohne Einfallstellen gebaut werden kann, d.h. es braucht weniger Neupulver zugemischt werden. Dies führt insgesamt zu einer verbesserten Wirtschaftlichkeit gegenüber dem reinen Faser-in-Korn Pulver (reiner Komposit). In einer bevorzugten Ausführungsform handelt es sich beim erfindungsgemäßen Pulvergemisch demnach um eine Trockenmischung (Dry Blend) aus erstem und zweitem Pulver.

Des Weiteren kann es beim Verarbeiten des erfindungsgemäßen Pulvergemisches zu einem verringerten Verzug des hergestellten Bauteils kommen, welcher bspw. durch eine geringere Kristallisationsneigung begründet sein kann. Dadurch kann bei einer niedrigeren Wechselrahmentemperatur gearbeitet werden als beim reinen Komposit. Dies führt zu einer verringerten Alterung des Pulvers im Prozess und zu einer weiteren Verbesserung der Auffrischrate.

Die vorteilhaften Eigenschaftskombinationen, die durch die vorliegende Erfindung realisiert werden, werden hauptsächlich darauf zurückgeführt, dass sich der im ersten thermoplastischen Polymermaterial eingebettete Verstärkungsstoff vorteilhaft auf die mechanischen Eigenschaften auswirkt, während sich die Abwesenheit des Verstärkungsstoffes im zweiten thermoplastischen Polymermaterial vorteilhaft auf die untere Bauteiltemperatur, das Prozessfenster und die Auffrischrate auswirkt. Dadurch wird ein hervorragender Kompromiss aus (gegenüber entsprechend faserunverstärkten Objekten verbesserten) mechanischen Eigenschaften und (gegenüber den bekannten faserverstärkten Objekten wirtschaftlicherer und prozesssicherer) Herstellbarkeit sowie Aussehen (optische Bauteilqualität und/oder Oberflächengüte der Bauteile) gefunden.

Grundsätzlich ist es möglich, dass das erste thermoplastische Polymermaterial und das zweite thermoplastische Polymermaterial voneinander verschieden sind. In einer bevorzugten Ausführungsform handelt es sich aber um das gleiche thermoplastische Polymermaterial. Ebenso ist das Vorhandensein von einem oder mehreren weiteren thermoplastischen Polymermaterialien, d. h. eine weitere Polymerpulverkomponente im Pulvergemisch nicht ausgeschlossen. Allerdings ist es vorzuziehen, dass kein weiteres thermoplastisches Polymermaterial im Pulvergemisch vorhanden ist.

Bevorzugt ist das erste thermoplastische Polymermaterial ein Polymermaterial, das aus der aus Homopolymeren, Copolymeren, Blockcopolymeren und Polyblends (auch bekannt als Polymerblends) bestehenden Gruppe ausgewählt ist. Bevorzugt ist auch das zweite thermoplastische Material ein Polymermaterial, das aus der aus Homopolymeren, Copolymeren, Blockcopolymeren und Polyblends bestehenden Gruppe ausgewählt ist. Insbesondere ist das thermoplastische Polymermaterial des ersten Pulvers und das thermoplastische Polymermaterial des zweiten Pulvers ein Polymermaterial, das aus der gleichen aus Homopolymeren, Copolymeren, Blockcopolymeren und Polyblends bestehenden Gruppe ausgewählt ist. Beim Polymermaterial handelt es sich um einen Thermoplasten, und dieser kann amorph bzw. schmelzamorph (in DSC-Messungen bei einer Kühlrate von 20 °C/min wird im Wesentlichen keine Kristallisation oder gar keine Kristallisation beobachtet), pseudoamorph (im ersten Heizlauf von DSC-Messungen bei einer Heizrate von 20 °C/min zeigt sich mindestens ein Schmelzpeak, ermittelt über DIN EN ISO 11357, beim Abkühlen mit einer Kühlrate von 20°C/min zeigt sich aber im Wesentlichen keine Kristallisation) oder teilkristallin (in DSC-Messungen bei einer Heizrate von 20 °C/min zeigt sich mindestens ein Schmelzpeak, gemäß DIN EN ISO 11357) sein. Vorzugsweise handelt es sich beim Pulver um ein teilkristallines Polymermaterial. Die Bauteile können entweder im Wesentlichen teilkristallin sein oder aber im Wesentlichen amorph. Letzteres ist auch dann der Fall, wenn es sich um ein kristallisiertes schmelzamorphes Polymermaterial handelt. Insbesondere weist das Polymermaterial auch einen Kristallisationspeak auf, d.h. die Bauteile sind im Wesentlichen teilkristallin. In einer bevorzugten Ausführungsform sind die Bauteile teilkristallin.

Unter einem Polyblend (auch als "Polymerblend" bezeichnet) wird eine Mischung aus mehreren Polymeren verstanden. Bei einem Polyblend kann es sich um ein einphasiges Polyblend (homogenes Polyblend) oder mehrphasiges Polyblend (heterogenes Polyblend) handeln. Bei einem mehrphasigen Polyblend werden mittels dynamischer Differenzkalorimetrie typischerweise mehrere Glasübergänge beobachtet. Ferner können bei einem mehrphasigen Polyblend mittels dynamischer Differenzkalorimetrie mehrere Schmelzpeaks entsprechend den Schmelzpunkten der einzelnen Phasen beobachtet werden. Im Falle eines mehrphasigen Polyblends kann es möglich sein, dass die maximale Verarbeitungstemperatur unterhalb des höchsten aber oberhalb des zweithöchsten Schmelzpunkts liegt.

Polyblends können erfindungsgemäß aus Homopolymeren und/oder Copolymeren und/oder Blockcopolymeren gebildet sein. Vorzugsweise umfassen Polyblends mindestens zwei der nachfolgend beschriebenen Polymere und/oder Copolymere und/oder Blockcopolymere. Beim Polyblend handelt es sich vorzugsweise um eine Mischung aus einem teilkristallinen und einem amorphen oder pseudoamorphen Polymermaterial.

Das thermoplastische Polymermaterial des ersten und/oder des zweiten Pulvers kann ein Polymermaterial umfassen, das aus der aus folgenden Polymeren bestehenden Gruppe ausgewählt ist, oder ein Polymerblend aus mindestens zwei Polymeren, die aus der aus folgenden Polymeren bestehenden Gruppe ausgewählt sind: Polyetherimide, Polycarbonate, Polyarylensulfide, Polyarylethersulfone, Polyphenylenoxide, Polyethersulfone, AcrylnitrilButadien-Styrol-Copolymerisate, Acrylnitril-Styrol-Acrylat-Copolymerisate (ASA), Polyvinylchlorid, Polyacrylate, Polyester, Polyamide, Polyaryletherketone, Polyether, Polyurethane, Polyimide, Polyamidimide, Polysiloxane, Polyolefine und Copolymere, welche mindestens zwei verschiedene Wiederholungseinheiten der vorgenannten Polymere aufweisen, wobei die Gruppe bevorzugt aus Polyaryletherketonen, Polyphenylensulfiden, Polycarbonaten, Polyetherimiden, Polypropylen, Polyethylen und Polyamiden und deren Copolymeren und Polymerblends besteht.

Geeignete PAEK-Polymere und -Copolymere beispielsweise werden bevorzugt aus der aus Polyetheretherketon (PEEK), Polyetherketonketon (PEKK), Polyetherketon (PEK), Polyetheretherketonketon (PEEKK), Polyetherketonetherketonketon (PEKEKK), Polyetheretheretherketon (PEEEK), Polyetheretherketon-Polyetherdiphenyletherketon (PEEK-PEDEK) und Copolymeren, die mindestens eines der vorgenannten Polymere einschließen, bestehenden Gruppe ausgewählt.

Gemäß einer bevorzugten Ausführungsform umfasst das thermoplastische Polymermaterial des ersten Pulvers und/oder das thermoplastische Polymermaterial des zweiten Pulvers ein Polymer der Klasse der Polyaryletherketone (PAEK), wobei das Polyaryletherketon vorzugsweise eine Schmelztemperatur Tm (bestimmt gemäß DIN EN ISO 11357) von höchstens 330 °C, vorzugsweise von höchstens 320 °C, insbesondere von höchstens 310 °C aufweist, und/oder wobei das Polyaryletherketon eine Glasübergangstemperatur Tg (bestimmt gemäß DIN EN ISO 11357) von mindestens 120 °C, vorzugsweise von mindestens 140 °C, insbesondere von mindestens 150 °C aufweist.

Gemäß einer bevorzugten Ausführungsform besteht das thermoplastische Polymermaterial des ersten Pulvers und/oder das thermoplastische Polymermaterial des zweiten Pulvers aus einem Polymer der Klasse der Polyetherketonketone (PEKK). In diesem Fall ist es bevorzugt, dass an den Phenylenresten des Polyetherketonketons (PEKK), die mit zwei Carbonylgruppen verbunden sind, die Carbonylgruppen zu mindestens 10%, bevorzugt zu 60% und/oder höchstens 70% in para-Stellung und ansonsten in meta-Stellung stehen. Gemäß einer weiteren bevorzugten Ausführungsform besteht oder umfasst das thermoplastische Polymermaterial des ersten Pulvers und/oder das thermoplastische Polymermaterial des zweiten Pulvers aus einem Polymer der Klasse der Polyetheretherketon-Polyetherdiphenyletherketone (PEEK-PEDEK) mit folgenden Wiederholungseinheiten:
Wiederholungseinheit A 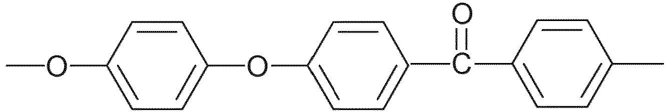
und/oder Wiederholungseinheit B

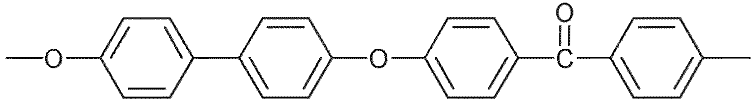

Das genannte Polyetheretherketon-Polyetherdiphenyletherketon-Polymer kann dabei vorzugsweise einen Stoffmengenanteil von zumindest 68 Mol-%, bevorzugt von zumindest 71 Mol-%, der Wiederholungseinheit A aufweisen. Besonders bevorzugte Polyetheretherketon-Polyetherdiphenyletherketon-Polymere weisen einen Stoffmengenanteil von zumindest 71 Mol-%, oder, weiter bevorzugt von zumindest 74 Mol-%, der Wiederholungseinheit A auf. Das genannte Polyetheretherketon-Polyetherdiphenyletherketon Polymer weist bevorzugt einen Stoffmengenanteil von weniger als 90 Mol-%, weiter bevorzugt von 82 Mol-% oder weniger der Wiederholungseinheit A auf. Das genannte Polymer umfasst weiter einen bevorzugten Stoffmengenanteil von mindestens 68 Mol-%, besonders bevorzugt von mindestens 70 Mol-%, insbesondere von mindestens 72 Mol-%, der Wiederholungseinheit A auf. Höchstens weist das Polyetheretherketon-Polyetherdiphenyletherketon-Polymer einen bevorzugten Stoffmengenanteil von 82 Mol-%, besonders bevorzugt von höchstens 80 Mol-%, insbesondere von höchstens 77 Mol-%, der Wiederholungseinheit A auf.

Dabei liegt das Verhältnis der Wiederholungseinheit A zur Wiederholungseinheit B vorzugsweise bei mindestens 65 zu 35 und/oder bei höchstens 95 zu 5.

Geeignete Polyamid-Polymere oder -Copolymere können aus der Gruppe ausgewählt werden, die aus Polyamid 6/6T, Polyamidelastomeren wie Polyetherblockamide wie z.B. PEBAX^{™}-basierte Materialien, Polyamid 6, Polyamid 66, Polyamid 11, Polyamid 12, Polyamid 612, Polyamid 610, Polyamid 1010, Polyamid1212, Polyamid PA6T/66, PA4T/46 und Copolymeren, die mindestens eines der vorgenannten Polymere einschließen besteht. Geeignete Polyesterpolymere oder Copolymere können aus der aus Polyalkylenterephthalaten (z.B. PET, PBT) und deren Copolymeren ausgewählt werden.

Vorzugsweise umfasst das thermoplastische Polymermaterial des ersten Pulvers und/oder das thermoplastische Polymermaterial des zweiten Pulvers ein Polymer der Klasse der Polyamide (PA) oder besteht daraus. Bevorzugt ist das Polyamid ein Polyamid 11 (PA 11) oder Polyamid 12 (PA 12).

Geeignete Polyolefinpolymere oder -Copolymere können aus der aus Polyethylen und Polypropylen bestehenden Gruppe ausgewählt werden. Bevorzugt handelt es sich um Polypropylen-Polyethylen-Copolymere. Geeignete Polystyrolpolymere oder Copolymere können aus der aus syndiotaktischen und isotaktischen Polystyrolen bestehenden Gruppe ausgewählt werden. Geeignete Polyimidpolymere oder -Copolymere können aus der aus Polyarylamid, Polybismaleinimid und insbesondere Polyetherimid bestehenden Gruppe ausgewählt werden.

Vorzugsweise weist das Homo- oder Co-Polymer einen Schmelzpunkt T_{S} von 100 bis 400°C, bevorzugt 120 bis 350°C und weiter bevorzugt 155 bis 320°C auf.

Die Glasübergangstemperatur T_{G} des Homo- oder Co-Polymers liegt bevorzugt in einem Bereich von -10 bis 300°C, weiter bevorzugt 50°C bis 300°C und insbesondere 85 bis 250°C und noch weiter bevorzugt 130 bis 230°C..

Vorzugsweise weist das Homo- oder Co-Polymer ein Zahlenmittel Mₙ von mindestens 10.000, weiter bevorzugt 15.000 bis 200.000 und besonders 15.000 bis 100.000 oder ein Gewichtsmittel M_{w} von mindestens 20.000, und weiter bevorzugt 30.000 bis 500.000 und besonders M_{w} 30.000 bis 200.000 auf.

Der Polymerisationsgrad n des Homo- oder Co-Polymers beträgt vorzugsweise 10 bis 10.000, weiter bevorzugt 20 bis 5000 und insbesondere 50 bis 1000.

Eine weitere bevorzugte Möglichkeit, um Endkristallinitäten im hergestellten Objekt günstig zu beeinflussen und zu verringern, stellt die Verwendung eines geeigneten Copolymers oder eines geeigneten Polymerblends dar. Für PAEK sind neben PAEK-Copolymeren Copolymere mit Polyarylethersulfon (PAES) bevorzugt, insbesondere ein Polyaryletherketon(PAEK)/Polyarylethersulfon(PAES)-Diblock-Copolymere PAEK/PAES/PAEK-Triblock-Copolymere, weiter bevorzugt PEK/PES-Diblockcopolymere oder PEK/PES/PEK- Triblockcopolymere. Für Polyimide sind Polyetherimide bevorzugt. Die vorliegende Erfindung eignet sich insbesondere auch für den Einsatz von Polyblends. Insbesondere Polyblends welche zumindest aus einem teilkristallinem Polymer und aus zumindest einem amorphen Polymer bestehen, Insbesondere sind solche Polyblends geeignet um den Schmelz- und Erstarrungsvorgang zu verbessern und/oder die Endkristallinität des Bauteils zu senken. Vorzugsweise umfasst das Polyblend mindestens ein Polyetherimid und mindestens ein weiteres Polymer.

Besonders bevorzugt umfassen Polyblends zumindest ein Polyetherimid und ein Polycarbonat oder ein Polyaryletherketon, insbesondere ein Polyetherketonketon (PEKK) oder ein Polyphenylensulfid wobei weiter bevorzugt die vorgenannten Anteile des Polyetherimids in einem solchen Polyblend vorliegen.

Weitere bevorzugte Polyblends umfassen zumindest
- Polyphenylensulfid (PPS) und Polyetherimid (PEI) oder
- Polycarbonat und ABS oder
- Polycarbonat und ASA oder
- Polycarbonat und ABS und ASA. Als Ausgangsmaterialien zur Herstellung derartiger Polyblends werden beispielsweise die von der Firma Covestro unter dem Handelsnamen "Bayblend^{®}" vertriebenen Polyblends verwendet.

Weitere bevorzugte Polyblends umfassen mindestens ein Polyaryletherketon-Polyarylethersulfon-Copolymer oder ein Polyaryletherketon-Polyarylethersulfon-Copolymer. Vorzugsweise ist das Polyblend ausgewählt aus der aus Polyblends von Polyaryletherketonen mit Polyetherimiden und Polycarbonaten, Polyblends von Polyaryletherketonen mit Polyimiden, Polyblends von Polyaryletherketonen mit Polyphenylensulfonen, Polyblends von Polyaryletherketonen mit Polyethersulfonen und Polyblends von Polyaryletherketonen mit Polyarylaten bestehenden Gruppe.

Hinsichtlich der Korngröße der Pulverteilchen ist eine mittlere Korngrößen d₅₀ von mindestens 20 µm geeignet, bevorzugt mindestens 30, mindestens 40, mindestens 50, mindestens 60 µm, besonders bevorzugt mindestens 70 µm und/oder höchstens 150 µm, bevorzugt höchstens 140, 130, 120, 110, 100, besonders bevorzugt höchstens 90 µm, insbesondere von 40 bis 70 µm. In einer Ausführungsform beziehen sich die vorgenannten Bereiche auf die mittlere Korngröße der Pulverteilchen des ersten Pulvers. In einer anderen Ausführungsform beziehen sich die vorgenannten Bereiche auf die mittlere Korngröße der Pulverteilchen des zweiten Pulvers. In einer bevorzugten Ausführungsform treffen die vorgenannten Bereiche für die Pulverteilchen des ersten und des zweiten Pulvers zu. Mittlere Korngrößen d₅₀ im Bereich von 40 bis 70µm sind insbesondere bevorzugt für das zweite Pulver. Mittlere Korngrößen d₅₀ im Bereich von 40 bis 70µm sind insbesondere auch bevorzugt für das erste Pulver, sofern es keine Mikrofasern enthält. Mittlere Korngrößen d₅₀ im Bereich von 70 bis 100 sind hingegen insbesondere bevorzugt, wenn das erste Pulver Mikrofasern enthält, wobei Mikrofasern Fasern mit einem Faserdurchmesser im Mikronbereich von mindestens 1µm, z.B. bei Glas-, Karbon, Wollastonitfasern usw., sind. Nur wenn die Korngröße ausreichend hoch ist, kann ein gewisses Aspektverhältnis der Fasern im Korn erreicht werden, so dass auch der E-Modul deutlich ansteigt. Bei zu geringen Partikelgrößen fällt der Anstieg des E-Moduls geringer aus. Für verstärkte Pulver mit Nanofasern, d.h. Fasern mit einem Faserdurchmesser < 1µm, wie etwa bei Carbon-Nanotubes oder Nanofüllstoffe, sind mittlere Korngrößen d₅₀ im Bereich von 40 bis 70µm bevorzugt.

Ein besonders ausgewogenes Eigenschaftsprofil kann erreicht werden, wenn der relative Anteil des ersten Pulvers, der relative Anteil des zweiten Pulvers und/oder der relative Anteil des Verstärkungsstoffes in bestimmten Bereichen liegt.

So beträgt der Anteil des zweiten Pulvers in bevorzugten Pulvergemischen mindestens 1 Volumenprozent, bevorzugt 5 Volumenprozent, besonders bevorzugt 10 oder 20 und/oder höchstens 90 Volumenprozent, bevorzugt höchstens 70 Volumenprozent, besonders bevorzugt höchstens 50% jeweils bezogen auf das Gesamtvolumen des Pulvergemisches.

Der Anteil des ersten Pulvers liegt vorzugsweise im Bereich von 10 bis 99 Volumenprozent, vorzugsweise im Bereich von 30 bis 95 Volumenprozent und insbesondere im Bereich von 50 bis 90 Volumenprozent, jeweils bezogen auf das Gesamtvolumen des Pulvergemisches.

Jeweils bezogen auf das Gesamtgewicht des Pulvergemisches beträgt der Anteil des Verstärkungsstoffes in bestimmten Ausführungsformen mindestens 10, vorzugsweise mindestens 15 Gewichtsprozent und besonders bevorzugt mindestens 20% und/oder höchstens 60 und vorzugsweise höchstens 50 % und besonders bevorzugt höchstens 40% und insbesondere höchstens 35%. In bestimmten Ausführungsformen beträgt der Anteil des Verstärkungsstoffes 35 (± 5) %, 40 (± 5) % oder 50 (± 5) %, jeweils bezogen auf das Gesamtgewicht des Pulvergemisches.

Weitere Beispiele von Mengenanteilen erfindungsgemäßer Pulvergemische sind in nachfolgender Tabelle charakterisiert:

| Pulvergemisch | Anteil des ersten Pulvers | Anteil des zweiten Pulvers | Menge des im ersten Pulver enthaltenen Verstärkungsstoffes |
|---|---|---|---|
| | [in Volumenprozent pro Gesamtvolumen des Pulvergemisches] | [in Volumenprozent pro Gesamtvolumen des Pulvergemisches] | |
| | | | [in Gewichtsprozent pro Gesamtgewicht des Pulvergemisches] |
| 1 | 50 - 90 | 10 - 50 | 15 - 30 |
| 2 | 55 - 90 | 10 - 45 | 15 - 30 |
| 3 | 60 - 90 | 10-40 | 15 -30 |
| 4 | 75 - 85 | 15 - 35 | 15 - 30 |
| 5 | 70-80 | 20 - 30 | 15 - 30 |
| 6 | 50 - 90 | 10 - 50 | 17-28 |
| 7 | 55 - 90 | 10 - 45 | 17-28 |
| 8 | 60 - 90 | 10 - 40 | 17 - 28 |
| 9 | 75 - 85 | 15 - 35 | 17-28 |
| 10 | 70 - 80 | 20 - 30 | 17-28 |
| 11 | 50 - 90 | 10 - 50 | 18 - 25 |
| 12 | 55 - 90 | 10 - 45 | 18 - 25 |
| 13 | 60 - 90 | 10 - 40 | 18 - 25 |
| 14 | 75 -85 | 15 - 35 | 18 - 25 |
| 15 | 70 -80 | 20 - 30 | 18 - 25 |
| 16 | 50 | 50 | 15 - 30 |
| 17 | 60 | 40 | 15 - 30 |
| 18 | 70 | 30 | 15 - 30 |
| 19 | 80 | 20 | 15 - 30 |
| 20 | 90 | 10 | 15 - 30 |
| 21 | 50 | 50 | 17-28 |
| 22 | 60 | 40 | 17-28 |
| 23 | 70 | 30 | 17-28 |
| 24 | 80 | 20 | 17-28 |
| 25 | 90 | 10 | 17-28 |
| 26 | 50 | 50 | 18 - 25 |
| 27 | 60 | 40 | 18 - 25 |
| 28 | 70 | 30 | 18 - 25 |
| 29 | 80 | 20 | 18 - 25 |
| 30 | 90 | 10 | 18 - 25 |

Ein Gegenstand der vorliegenden Erfindung ist außerdem ein Verfahren zum Herstellen des erfindungsgemäßen Pulvergemisches. Dabei werden das erste Pulver und das zweite Pulver in einem geeigneten und ggf. vorbestimmten Mischungsverhältnis, insbesondere in einer den relativen Anteilen entsprechenden Menge, durch Trockenmischung miteinander vermischt. Vorzugsweise weist das erste Pulver und der Verstärkungsstoff, und in bevorzugten Ausführungsformen auch das zweite Pulver, die im Rahmen der Beschreibung des erfindungsgemäßen Pulvergemisches erwähnten Eigenschaften auf.

Ein weiterer Gegenstand der vorliegenden Erfindung ist ein Verfahren zum Herstellen eines dreidimensionalen Objekts, insbesondere durch schichtweises Verfestigen eines pulverförmigen Aufbaumaterials an den dem Querschnitt des dreidimensionalen Objekts in der jeweiligen Schicht entsprechenden Stellen, insbesondere durch Einwirkung von Strahlung. Als Aufbaumaterial dient das erfindungsgemäße Pulvergemisch in allen hier beschriebenen Varianten. Bei der Strahlung handelt es sich vorzugsweise um elektromagnetische Strahlung und/oder Wellen, insbesondere Laserstrahlung.

Das erfindungsgemäß hergestellte dreidimensionale Objekt ist vorzugsweise durch mindestens eine der folgenden Eigenschaften charakterisiert:
(i) Im Vergleich zu einem Bauteil, das nur aus dem zweiten Pulver als Aufbaumaterial hergestellt wurde, ist der E-Modul höher, bevorzugt um mindestens 10 %, weiter bevorzugt um mindestens 20 % und insbesondere um mindestens 30 % oder gar um mindestens 40 % oder mindestens 50% höher
(ii) im Vergleich zu einem Bauteil, das nur aus dem ersten Pulver als Aufbaumaterial hergestellt wurde, ist der E-Modul um höchstens 25 %, bevorzugt um höchstens 20 %, weiter bevorzugt um höchstens 15 % und insbesondere um höchstens 10 % niedriger;
(iii) im Vergleich zu einem Bauteil, das nur aus dem ersten Pulver als Aufbaumaterial hergestellt wurde, ist der Auffrischfaktor höher, wobei ein höherer Auffrischfaktor vorzugsweise durch eine geringere Anzahl an Einfallstellen gekennzeichnet ist.
(iv) im Vergleich zu einem Bauteil, das nur aus dem ersten Pulver als Aufbaumaterial hergestellt wurde, ist die Vorzugsrichtung des Verstärkungsstoffs und insbesondere der Fasern, geringer und/oder ist die Isotropie in xyz-Richtung höher, insbesondere in Bezug auf den E-Modul;
(v) im Vergleich zu einem Bauteil, das nur aus dem ersten Pulver als Aufbaumaterial hergestellt wurde, ist die Porosität geringer.
(vi) im Vergleich zu einem Bauteil, das nur aus dem zweiten Pulver als Aufbaumaterial hergestellt wurde, ist die maximale Zugfestigkeit (UTS) höher, bevorzugt um 5 %, weiter bevorzugt um 10 % und insbesondere um 15 % höher;
(vii) im Vergleich zu einem Bauteil, das nur aus dem ersten Pulver als Aufbaumaterial hergestellt wurde, ist die maximale Zugfestigkeit (UTS) um höchstens 15% niedriger, bevorzugt um höchstens 10% niedriger, besonders bevorzugt um höchstens 5% niedriger;
(viii) im Vergleich zu einem Bauteil, das nur aus dem ersten Pulver als Aufbaumaterial hergestellt wurde, ist die Bruchdehnung höher, bevorzugt um 10 %, weiter bevorzugt um 30 % und insbesondere um 50 % höher oder gar um 100% höher.

Vorzugsweise ist das erfindungsgemäß hergestellte dreidimensionale Objekt durch eine der nachfolgenden Kombinationen der vorgenannten Eigenschaften (i) bis (vii) charakterisiert:
- (i), (ii), (vi) und (vii);
- (i), (ii), (iii), (vi) und (vii);
- (iii), (vi) und (vii);
- (i), (ii) und (viii);
- (vi), (vii) und (viii);
- (i), (ii), (vi), (vii) und (viii)
- (iii) und (viii).

Zudem ist vorzugsweise die Bruch- und/oder Reißdehnung des erfindungsgemäß hergestellten dreidimensionalen Objekts höher als bei einem Bauteil, das nur aus dem zweiten Pulver als Aufbaumaterial hergestellt wurde.

Wenn ein Vergleich zwischen dem erfindungsgemäßen Pulvergemisch und dem ersten Pulver alleine gezogen wird, ist bezogen auf das Gewicht des Pulvergemischs bzw. bezogen auf das Gewicht des ersten Pulvers alleine der Anteil des Verstärkungsstoffes jeweils gleich. Entsprechendes gilt für einen Vergleich zwischen dem aus dem erfindungsgemäßen Pulvergemisch hergestellten dreidimensionalen Objekt und einem Bauteil, das nur aus dem ersten Pulver als Aufbaumaterial hergestellt wurde, gezogen wird.

Das erfindungsgemäß hergestellte dreidimensionale Objekt weist vorzugsweise eine Porosität von höchstens 10 %, bevorzugt höchstens 7 %, weiter bevorzugt höchstens 5% und insbesondere höchstens 4 % auf.

Die Endkristallinität des dreidimensionalen Objekts beträgt vorzugsweise 80% oder weniger, weiter bevorzugt 50% oder weniger, insbesondere 5-70%, noch weiter bevorzugt 15-50% und besonders 15-35%. Speziell bei Verwendung von Polyaryletherketone (PAEK) als thermoplastisches Polymermaterial beträgt die Endkristallinität im erfindungsgemäß hergestellten Objekt vorzugsweise 5 bis 45%, bevorzugt 10 bis 40%, weiter bevorzugt 15 bis 35%, noch weiter bevorzugt 15 bis 30%, und besonders 20 bis 25%. Speziell für Polyamide (PA) beträgt die Endkristallinität im erfindungsgemäß hergestellten Objekt vorzugsweise 10 bis 50%, bevorzugt 15 bis 40%, weiter bevorzugt 15 bis 35% und besonders 20 bis 30%.

Durch Verwendung des erfindungsgemäßen Pulvergemisches anstelle eines Pulvers, das kein zweites Pulver enthält, kann die unterst mögliche Bautemperatur in einem vordefinierten Verfahren zum Herstellen eines dreidimensionalen Objekts durch schichtweises Verfestigen eines pulverförmigen Aufbaumaterials an den dem Querschnitt des dreidimensionalen Objekts in der jeweiligen Schicht entsprechenden Stellen durch Einwirkung von Strahlung erniedrigt werden. Eine bevorzugte Ausführungsform ist demnach dadurch charakterisiert, dass die niedrigste Temperatur, bei der das Verfestigen des Aufbaumaterials durchgeführt werden kann, im Vergleich zur Verwendung eines Aufbaumaterials, das ausschließlich erstes Pulver enthält, abgesenkt ist. Bevorzugt ist besagte Temperatur um mindestens 1°C, , 2°C, 3°C, 4°C oder 5 °C abgesenkt, besonders bevorzugt um mindestens 6, 7, 8, 9, 10, 11, 12 oder gar 13 °C.

Bei Bedarf kann durch einen kontrollierten, langsamen Abkühlschritt ein Kompromiss aus möglichst geringem Verzug und geringer Endkristallinität erreicht werden. Daher umfasst das erfindungsgemäße Verfahren in einer bevorzugten Ausführungsform einen kontrollierten Kühlungsschritt. Das heißt, das hergestellte dreidimensionale Objekt wird definierten Temperaturen ausgesetzt, sodass es sich kontrolliert und/oder in gewünschter Weise abkühlt. Beispielsweise kann die Abkühlgeschwindigkeit 0,01-10°C/min, bevorzugt mindestens 0,1°C/min und/oder höchstens 5°C/min und weiter bevorzugt mindestens 1°C/min und/oder höchstens 5°C/min betragen. Vorzugsweise erfolgt der Kühlungsschritt innerhalb von 10 Minuten, bevorzugt innerhalb von 5 Minuten, weiter bevorzugt innerhalb von 3 Minuten, insbesondere innerhalb von 1 Minute nach Einwirkung der Strahlung auf die letzte Schicht des pulverförmigen Aufbaumaterials. Der kontrollierte Kühlungsschritt kann durch eine vorausgewählte Abkühlgeschwindigkeit realisiert werden. Es kann langsam, möglicherweise langsamer als das natürliche (passive) Kühlen, oder schnell gekühlt werden (aktives Kühlen). Es kann auch ein Abkühlungsprofil aus verschiedenen Abkühlungsgeschwindigkeiten angewendet werden.

Es ist zu beachten, dass die Abkühlgeschwindigkeit auch das Curling und folglich die plastische Stabilität (d.h. Bauteilverzug) des Objekts beeinflussen kann. Die ideale Abkühlungsgeschwindigkeit bzw. das ideale Abkühlungsprofil hängt von dem verwendeten Pulvergemisch, insbesondere dem thermoplastischen Polymermaterial sowie den Mengenanteilen von erstem und zweiten Pulver ab, und kann experimentell unter der Maßgabe ermittelt werden, dass die Kristallinität und plastische Stabilität des hergestellten Objekts im gewünschten Bereich, vorzugsweise jeweils so gering wie möglich, liegt.

Um das Verfahren wirtschaftlicher und umweltverträglicher zu gestalten, kann ein Teil des in einem vorangegangenen Herstellungszyklus übriggebliebenen, unverfestigten Aufbaumaterials ("Altpulver") in einem nachfolgenden Zyklus wiederverwendet werden. Dazu wird das Altpulver mit frischem Pulvergemisch ("Neupulver") in einem vorbestimmten Verhältnis miteinander gemischt. In einer bevorzugten Ausführungsform weist das Aufbaumaterial also einen Anteil Altpulver, welches zuvor beim Herstellen eines Objekts als unverfestigtes Aufbaumaterial übriggeblieben ist, und einen Anteil Neupulver, das zuvor noch nicht beim Herstellen eines Objekts verwendet worden ist, auf. Vorzugsweise beträgt der Anteil an Neupulver höchstens 60 Gewichtsprozent, insbesondere höchstens 50, 40, 30 oder gar 20 Gewichtsprozent.

Gegenstand der vorliegenden Erfindung ist auch ein dreidimensionales Objekt, welches durch schichtweises Verfestigen eines pulverförmigen Aufbaumaterials an den dem Querschnitt des dreidimensionalen Objekts in der jeweiligen Schicht entsprechenden Stellen, insbesondere durch Einwirkung von Strahlung hergestellt worden ist. Als Aufbaumaterial dient das erfindungsgemäße Pulvergemisch in allen hier beschrieben Varianten. Das erfindungsgemäße dreidimensionale Objekt lässt sich gegebenenfalls dadurch charakterisieren, dass der darin enthaltene Verstärkungsstoff, in mindestens einem inneren Teil oder im gesamten inneren Teil des dreidimensionalen Objekts, ungleich verteilt ist, wobei vorzugsweise die ungleiche Verteilung des Verstärkungsstoffs regelmäßig im entsprechenden Teil des dreidimensionalen Objekt auftritt. Das Gefüge des erfindungsgemäßen dreidimensionalen Objekts lässt sich gegebenenfalls alternativ oder zusätzlich dadurch charakterisieren, wie es sich durch Verwendung des erfindungsgemäßen Pulvergemischs als Aufbaumaterial ergibt. Die unterschiedliche Verteilung des Verstärkungsstoffs kann sich daraus ergeben, dass in der kurzen Periode zwischen dem Aufschmelzen des Pulvergemischs an den definierten bestrahlten Stellen und dem Wiederverfestigen sich die festen, relativ gering beweglichen Partikel des Verstärkungsstoffs aus dem ersten Pulver nicht so schnell mit dem Polymer aus dem zweiten Pulver vermischen und somit nach der Verfestigung sich lokal unterschiedliche Konzentrationen ergeben. Das sich ergebende Gefüge bzw. die lokal unterschiedlichen Konzentrationen an Verstärkungsstoff lassen sich zum Beispiel durch Anfertigen von Schnitten oder Schliffen des dreidimensionalen Objekts, etwa durch Mikrotomschnitte, sowie Beobachtung durch (mikro-)optische Methoden beschreiben, bestimmen und falls gewünscht quantifizieren.

Das erfindungsgemäße dreidimensionale Objekt weist vorzugsweise die bereits oben erwähnten Eigenschaften auf; ferner können dem Produkt diejenigen Eigenschaften zugeschrieben werden, die sich aus dem Einsatz des erfindungsgemäßen Pulvergemischs bzw. dem erfindungsgemäßen Verfahren zur Herstellung des dreidimensionalen Objekts ergeben.

Ein weiterer Gegenstand der vorliegenden Erfindung ist die Verwendung des erfindungsgemäßen Pulvergemischs zur Erhöhung der Auffrischrate, Verbesserung des Verzugs und/oder Verbesserung der mechanischen Eigenschaften, insbesondere der Bruchdehnung, eines dreidimensionalen Objekts, das durch schichtweises Verfestigen des als Aufbaumaterial dienenden Pulvergemischs an den dem Querschnitt des dreidimensionalen Objekts in der jeweiligen Schicht entsprechenden Stellen, insbesondere durch Einwirkung von Strahlung, hergestellt wurde.

Im Rahmen der vorliegenden Erfindung haben die Begriffe "umfassend" oder "enthaltend" sowie deren grammatikalischen Abwandlungen nachfolgende Bedeutungen: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe neben ihrer herkömmlichen Bedeutung in einer Ausführungsform gleichbedeutend mit dem Begriff "im Wesentlichen bestehend aus" oder "bestehend aus" sein.

Fig. 1 zeigt beispielhaft eine Lasersintervorrichtung zur schichtweisen Herstellung eines dreidimensionalen Objektes.

Fig. 2 zeigt die Lage der kreuzförmigen Testbauteile und des Pyrometer-Messflecks ("P"; rechts oben) auf der EOS P800 mit Bauraumverkleinerung (links) und der EOSINT P395 zur Bestimmung der unteren Bautemperatur (Kreuztest).

Fig. 3 zeigt die Positionen der Zugproben und Dichtewürfel auf der EOS P800 zur Bestimmung der oberen Bautemperatur.

Fig. 4 zeigt die Position der x-Zugproben und der Verzugplatte im Baufeld der EOSINT P395.

Figur 5 zeigt einen Vergleich der Einfallstellen als Maß für die Pulveralterung für ein Objekt, das aus reinem, verstärkten Pulver hergestellt wurde (rechts) und einem Objekt, das aus dem erfindungsgemäßen Pulvergemisch hergestellt wurde (links).

Die Figuren 6 bis 9 zeigen jeweils die Bauraum-Matrix zur Bestimmung der Shore-Härte der Pulverbetthärte zur Ermittlung der oberen Bautemperatur jeweils auf der EOS P810/P800, P396/P395, P770 und P110.

Nachfolgende Methoden sind zur Ermittlung bestimmter Eigenschaften der erfindungsgemäßen Gegenstände grundsätzlich geeignet und wurden in den weiter unten beschriebenen Experimenten angewendet. Sie stellen bevorzugte Methoden zur Charakterisierung bestimmter Eigenschaften der erfindungsgemäßen Gegenstände dar.

### Bestimmung der Schmelze-Volumenfließrate (MVR)

Die Schmelze-Volumenfließrate dient zur Charakterisierung des Fließverhaltens (Formmassenprüfung) eines Thermoplasten bei bestimmten Druck- und Temperaturbedingungen. Die Prüfung kann grundsätzlich nach ISO 1133-1:2011 oder ASTM D1238-10 erfolgen. Enthält oder ist das thermoplastische Material ein Polymer der Klasse der Polyaryletherketone (PAEK), insbesondere PEKK, erfolgt die Prüfung vorzugsweise in Anlehnung an ASTM D1238-10. Enthält oder ist das thermoplastische Material ein Polymer der Klasse der Polyamide (PA), insbesondere PA 11, erfolgt die Prüfung vorzugsweise in Anlehnung an ISO 1133-1:2011.

In der ISO 1133-1:2011 wird die Schmelze-Volumenfließrate (MVR) eines thermoplastischen Kunststoffes durch Extrusion des geschmolzenen Materials aus dem Zylinder durch ein Extrusionswerkzeug mit festgelegter Länge und festgelegtem Durchmesser unter gegebenen Bedingungen von Temperatur und aufgebrachter Last bestimmt. Die Bestimmung des MVR in cm³/10min ist ein Messverfahren für die Weglänge, die der Kolben in einer festgelegten Zeit zurücklegt. Die Reproduzierbarkeit der Ergebnisse bei der Messung sind vom Raumklima abhängig. Die Versuche werden unter Standardklima nach DIN EN ISO 291 (23 °C / 50 %rh), Klasse 1 (+/-1°C; +/-5%) durchgeführt.

Die MVR-Messung für Polymere der Klasse der Polyaryletherketone (PAEK), insbesondere PEKK, wird am Gerät der Firma Ceast mit der Software Ceast-View 6.3.1 durchgeführt. Vor der Messung wird das Pulver (4,8g) mit der Thermowaage MA100 von Sartorius bei 120°C für 11 Minuten vorgetrocknet. Anschließend wird das Pulver innerhalb von 30 Sekunden in das MVR-Gerät gefüllt. Ein Gewicht von 5 KG wird angelegt und die Messung gemäß ASTM D1238-10 bei 380°C durchgeführt.

Die MVR-Messung für Polymer der Klasse der Polyamide (PA), insbesondere PA 11, wird am Gerät MeltFlow von der Firma Karg mit der Software k-base V4.00 Build 002 (E.Karg Industrietechnik) durchgeführt. Vor der Messung wird das Pulver (4,5g - 5,5 g) unter Inertatmosphäre (< 0,2 mbar) mit dem Gerät VacPrep 061 der Firma micromeritics für 30min bei 105°C vorgetrocknet. Die Messung erfolgt nach ISO 1133-1:2011 bei 255°C mit 5kg Gewicht.

### Ermittlung der mechanischen Eigenschaften mittels Zugprüfung

Die mechanischen Eigenschaften der erfindungsgemäßen dreidimensionalen Objekte können anhand von Prüfkörpern wie nachfolgend beschrieben bestimmt werden.

Die Prüfmethode und die Bauteilabmessungen der Prüfkörper werden von der Norm ASTM D 638 für den Zugversuch festgelegt. Hierzu eignet sich die Material-Prüfmaschine TC-FR005TN.A50, Dossier Nr.:605922 der Firma Zwick mit der Software TestExpert II V3.6. Im standardisierten Zugversuch wurden Prüfergebnisse wie Elastizitätsmodul [GPa], Zugfestigkeit [MPa] und Bruchdehnung mit Zugprüfkörpern des Typs I ermittelt. Die Prüfgeschwindigkeit beträgt 5,6mm/min für die Bauteile aus PEKK und 50mm/min für Bauteile aus PA11. Die Ermittlung des E-Moduls erfolgt mit einer Prüfgeschwindigkeit von 2mm/min (PEKK) bzw. 1mm/min (PA11) bei einer Dehnung zwischen 0,05 und 0,25%.

### Bestimmung der Schüttdichte der Pulver

Die Schüttdichte der Pulver kann entsprechend der Norm EN ISO-60 bestimmt werden.

### Bestimmung der spezifischen BET-Oberfläche der Pulver

Die BET-Oberfläche kann nach der in der Technik üblichen Methode bestimmt werden. Die allgemein in der Technik gebräuchliche Methode zur BET-Bestimmung beruht auf der Adsorption von Stickstoff. Als entsprechender Standard ist die DIN ISO 9277 bekannt. Die Messung lässt sich bequem durch Verwendung eines kommerziellen Messgeräts durchführen, beispielsweise eignet sich ein Messgerät der Firma Quantachrome, Nova Station A, welches mit einer Software ausgestattet ist (Quantachrome Instruments v1 1.0). Vor der Messung kann die zu messende Probe entgast werden, beispielsweise bei 80°C unter Vakuum (z.B. etwa 100mbar) für 2 Stunden. Die Auswertung kann mittels 5-Punkt-Methode erfolgen.

### Bestimmung der extrapolierten Anfangstemperatur des Schmelzpeaks

Das Material benötigt bestimmte Eigenschaften, die anhand der extrapolierten Anfangstemperatur T_{ei, m} mittels Dynamischer Differenz-Kalorimetrie, meist als DSC (Differential Scanning Calorimetry) bezeichnet, ermittelt werden kann. Die entsprechenden DSC-Messungen zur Bestimmung von T_{ei, m} werden vorzugsweise nach der Norm ISO 11357 durchgeführt. Als Gerät eignet sich beispielsweise Mettler Toledo DSC 823.

Enthält oder ist das thermoplastische Material ein Polymer der Klasse der Polyaryletherketone (PAEK), insbesondere PEKK, wird abweichend von der Norm eine Temperaturrampe von 0°C - 360°C - 0°C -360°C durchfahren. Bei der Anfangstemperatur (0°C), Maximaltemperatur (360°C) und Minimaltemperatur (0°C) wird drei Minuten gehalten, bei der Endtemperatur (360°C) nicht. Weiterhin beträgt die Heiz- bzw. Kühlrate 20K/min und die Einwaage bei den Messungen 4,5mg bis 5,5mg.

Enthält oder ist das thermoplastische Material ein Polymer der Klasse der Polyamide, insbesondere PA 11, wird eine vergleichbare Methode verwendet mit den beiden Unterschieden, dass die Maximal- bzw. Endtemperatur 250°C betrug.

### Ermittlung der Einfallstellen

Die Ermittlung der Einfallstellen erfolgt anhand von 25 quaderförmigen Testbauteilen (Maße: 20 mm x 4 mm x 13,56 mm) die in 5 Reihen gleichmäßig über das Baufeld verteilt sind. Die betrachtete Oberfläche befindet sich in der xz-Ebene.

### Bestimmung der unteren Bautemperatur (Kreuztest)

Die untere Bautemperatur (auch Non-Curl-Temperatur = NCT) wird mittels eines Kreuztests, d.h. einer Matrix an kreuzförmigen Testbauteilen (3x3 auf der verkleinerten Bauplattform der P800, bzw. verteilt über das gesamte Baufeld auf der P395, Fig. 2) bestimmt. Dazu wird die Lasersintermaschine auf eine Temperatur ca. 10°C (geschätzt) unterhalb der üblichen Bautemperatur oder alternativ ca. 5°C unter der zu erwartenden Non-Curl-Temperatur aufgewärmt. Nach automatischem Pulverauftrag wird ab einer Bauhöhe von z=6mm eine Lage der Kreuze belichtet. Zeigen diese starken prozesskritischen Curl, d.h. die Ränder der belichteten Testkreuze rollen sich signifikant nach oben, werden die Kreuze aus dem Bauraum entnommen und die Temperatur um 2°C erhöht. Nach Auflegen von 1,2 mm Pulverschichten (P800, 10 Schichten von 0,12 mm Schichtdicke) bzw. 2,4 mm (20 Schichten, P395) wird der Test wiederholt. Kann nur noch wenig Curl beobachtet werden, wird die Temperatur weiter in 1°C Schritten erhöht bis im Rahmen des Kreuztests kein prozesskritischer Curl mehr zu beobachten ist. D.h., die Kreuze können in voller Höhe (1,2 mm Höhe) gebaut werden, ohne dass diese beim Beschichtungsvorgang vom Beschichter aus dem Pulverbett herausgerissen werden. Die Temperatur, bei der kein prozesskritischer Curl mehr beobachtbar ist, wird als Non-Curl-Temperatur bezeichnet und definiert die niedrigste mögliche Bautemperatur. Figur 2 zeigt die Lage der kreuzförmigen Testbauteile und des Pyrometer-Messflecks ("P"; rechts oben) auf der EOS P800 mit Bauraumverkleinerung (links) und der EOSINT P395.

Der Begriff "kein prozesskritischer Curl" bedeutet, dass kein Curl beobachtet werden kann oder nur minimaler Curl, der aber in so geringer Ausprägung auftritt, dass der Beschichter beim Pulverauftrag die belichteten Kreuze nicht mehr aus dem Pulverbett herausreißen kann.

### Bestimmung der oberen Bautemperatur (Upper building temperature = UBT)

Als maximale Bautemperatur wird die Bautemperatur des pulverförmigen Materials bezeichnet, bei der das pulverförmige Material gerade nicht verklebt, sodass sich keine Aggregate von Pulverteilchen bilden, und das pulverförmige Material für den Beschichtungsvorgang noch ausreichend fließfähig ist und es zu keinen Beschichtungsfehlern kommt (z.B. Streifenbildung durch Agglomerate). Die maximale Verarbeitungstemperatur ist insbesondere von der Art des verwendeten pulverförmigen Materials abhängig.

Die maximale Bautemperatur kann aber auch dann erreicht sein, wenn es gerade noch nicht zur (lokalen) Schmelzefilmbildung des Pulvers kommt, welches an einem glänzendem Film (z.B. beim Polyamid 12, PA2200) oder auch an einer lokalen Dunkelfärbung des Pulvers zu erkennen ist (z.B. EOS PEEK-HP3 beschrieben in der Applikationsanleitung).

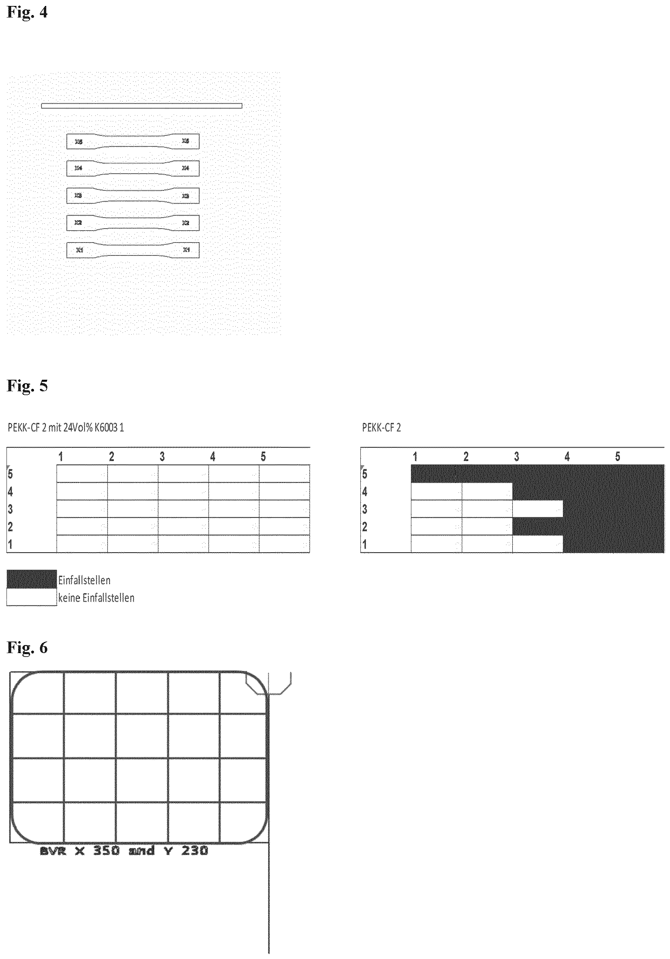

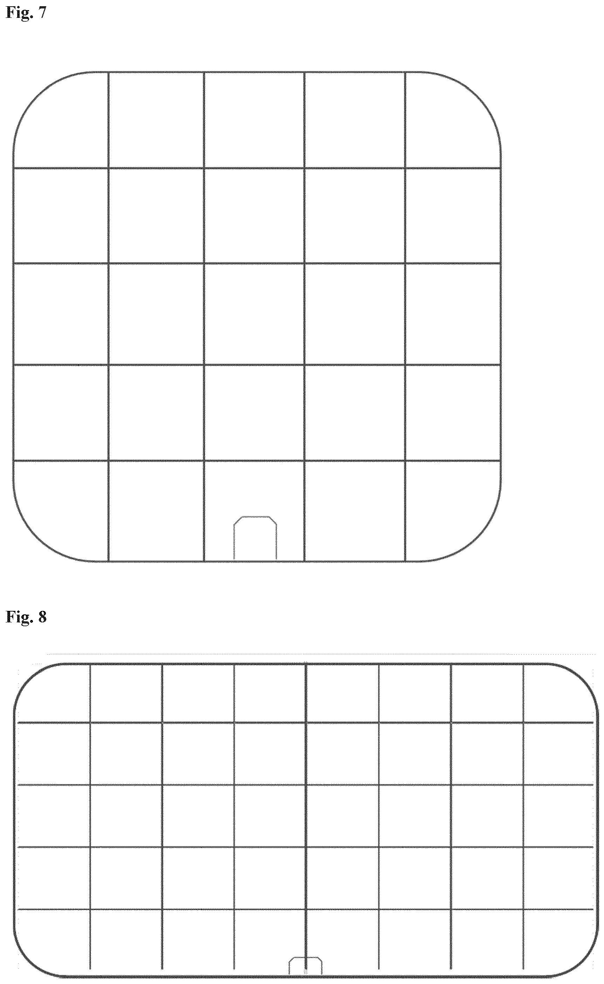

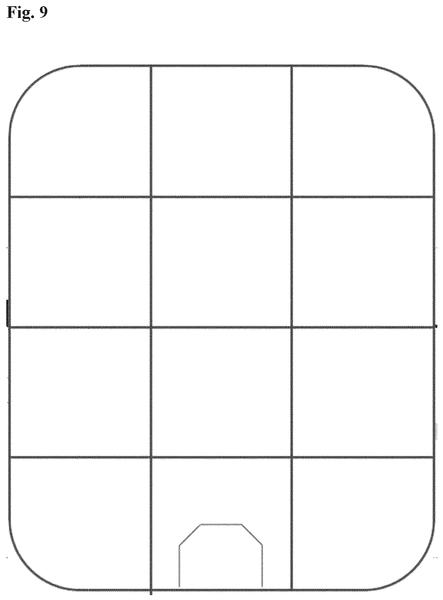

Zur Ermittlung wird schrittweise (1-2°C) die Prozesskammertemperatur nach der Ermittlung der Unteren Bautemperatur erhöht und das Pulverbett genau beobachtet, wann einer der oben beschriebenen Effekte eintritt. Zusätzlich oder alternativ kann die obere Bautemperatur über eine Bestimmung der Pulverbetthärte mittels Shore-Messung ermittelt werden. Dies kann vor allem dann hilfreich sein, wenn einer der oben beschriebenen Effekte noch nicht auftritt, das unversinterte Pulverbett nach Ende des Bauvorgangs aber so hart ist, dass sich belichtete Bauteile nicht mehr vom unversinterten Pulver trennen lassen, wodurch die Abbildungsgenauigkeit der Bauteile stark eingeschränkt ist. Dazu wird bei Erreichen der beobachteten oder angenommenen oberen Bautemperatur die Prozesskammertemperatur um 1°C abgesenkt und noch 3mm Pulver als Deckschicht im automatischen Baubetrieb schichtweise aufgelegt. Nach Ende des Bauvorgangs wird der Pulverkuchen auf Raumtemperatur abgekühlt. Die Oberfläche des abgekühlten Pulverkuchens wird im Wechselrahmen in der Maschine mittels eines geeigneten Shore-Härte Messgeräts (hier: Bareiss HPII) an einer Matrix auf der verkleinerten Bauplattform der P800 (4x5 in xy, Fig. 6), bzw. verteilt über das gesamte Baufeld auf der P395 (4x5, Fig. 7) in der Mitte des jeweiligen Sektors bestimmt. Der Wert zu Shore-Härte ergibt sich als Mittelwert aus den 50% höchsten Messwerten der Matrix. Befindet sich im Bereich der zu messenden Stelle ein Riss im Pulverbett (aufgrund des Pulverkuchenschwunds durch den Abkühlvorgang auf Raumtemperatur), dann ist mit ausreichendem Abstand vom Riss (ca. 15mm) der Messwert im jeweiligen Sektor zu detektieren. Für größere Lasersintermaschinen wie die P770 (siehe Fig. 8) bzw. P810 (ganzes Baufeld), sollte die Matrix auf 8x5 erweitert werden. Für kleinere Lasersintermaschinen wie die P110 wird auf 3x4 verkleinert (Fig. 9). Für andere Lasersintermaschinen mit anderen Bauraumgrößen können die Matritzen entsprechend angepasst werden, so dass ähnlich große Sektorengrößen erhalten werden. Die Shore Härte für die obere Bautemperatur ist insbesondere von der Art des verwendeten pulverförmigen Materials abhängig. Wie hoch diese ist, ist abhängig vom jeweiligen Material und von den Anforderungen an Bauteilgüte und Altpulverrecycling zu beurteilen. Geeigneterweise wird die gleiche Shore-Härte für die obere Bautemperatur als Vergleich zugrunde gelegt für einen spezifischen Composit-Blend und den dazugehörigen ersten Pulvern und zweiten Pulvern. D.h. für das erste Pulver, das zweite Pulver und Mischungen aus zweitem und ersten Pulver ist diese immer im Wesentlichen gleich hoch. Desweiteren sollte bevorzugt keine Veränderung der Heizungsverteilung der Laser-Sintermaschine zwischen den zu vergleichenden Pulvern vorgenommen werden, da dies Auswirkungen auf den ermittelten Shore-Härte Wert haben kann

Welche Shore-Härte Messung für welches Pulver geeignet ist kann ermittelt werden. Als bevorzugt haben sich Shore-Härten Shore 00, Shore 000 und Shore 000 S erwiesen, welche auch in der ASTM D 2240 geregelt ist.

Diese und weitere Härteprüfungen nach Shore sind in der Betriebsanleitung des Bareiss HPII (HPE II Shore [D], Version 26.05.2017) beschrieben und die zugehörigen Normen aufgeführt. Beispielhaft sind für einige Polymerpulver die Shore-Härten für die obere Bautemperatur mit dem Bareiss HPII Shore-Härte Messgerät ermittelt worden:
1) PEKK (K6003-2 und PEKK-CF1 und deren Pulvermischungen aus Beispiel 1):,
   Shore-00 = 85
2) Polyamid 11 (PA11 d80, HP11-30 aus Beispiel 5):
   Shore-00 = 50
3) Polyamid 12 (PA220050/50 Mischpulver auf P396, default.job: PA2200_120_100_Balance, Belichtungsparameter EOS):
   Shore-00 = 48

Diese ermittelten Werte stellen keine Absolutwerte für das genannte Pulver dar, sondern sind individuell vom Nutzer zu ermitteln. Für andere Laser-Sintersysteme und andere Prozessbedingungen (z.B. andere Heizungsverteilung, andere Heizungsparameter, andere Schichtstärken, andere Beschichtungsparameter) können diese Werte variieren. Genauso können diese Werte abhängig von den Anforderungen des Nutzers an die Bauteilgüte und in Abhängigkeit der Auffrischrate variieren.

### Verarbeitungstemperatur:

Die Verarbeitungstemperatur, dargestellt durch die Prozesskammertemperatur TPK wird bevorzugt so gewählt, dass sie mindestens 1°C, noch mehr bevorzugt mindestens 2°C und noch mehr bevorzugt mindestens 4°C über der unteren Bautemperatur des Pulvers liegt und/oder höchstens bei der oberen Bautemperatur, mehr bevorzugt höchstens 1°C, noch mehr bevorzugt höchstens 2°C und noch mehr bevorzugt höchstens 4°C unter der oberen Bautemperatur liegt. Bevorzugt liegt die Verarbeitungstemperatur über der unteren Bautemperatur und unterhalb der oberen Bautemperatur des Pulvers. So liegt eine ausreichende Prozesssicherheit vor (kein Curling, durch möglichst großer Abstand zur NCT) und es wird eine möglichst hohe Verarbeitungstemperatur erreicht, ohne dass es zu einem Verkleben des pulverförmigen Materials kommt. Bevorzugt wird für alle zu vergleichenden Pulver die gleiche Verarbeitungstemperatur gewählt. Sollte dies nicht möglich sein, da für ein Pulver die NCT zu hoch liegt, oder die UBT zu niedrig, dann ist für dieses Pulver eine andere Verarbeitungstemperatur zu wählen. Zur Vergleichbarkeit kann man sich dabei an der Shore-Härte des Pulverkuchens orientieren, welche im Wesentlichen gleich hoch sein sollte. Alternativ oder zusätzlich kann über die Bestimmung der Shore-Härte des abgekühlten Pulverkuchens, gemäß dem unter obere Bautemperaturbestimmung (UBT) beschriebenen Verfahren, die Verarbeitungstemperatur für jedes Pulver ermittelt werden. Der Shore-Härte Wert sollte dabei bevorzugt 5% und höchstens 50% unter dem Shore-Härte Wert der UBT liegen. Vorzugsweise höchstens 15% unterhalb, besonders bevorzugt höchstens 10% unterhalb.

### Herstellung von Bauteilen auf der Laser-Sintermaschine

Enthält oder ist das thermoplastische Material ein Polymer der Klasse der Polyaryletherketone (PAEK), insbesondere PEKK, wurden die Versuche auf einer modifizierten P800 (EOS P800 mit Startup-Kit PAEK 3302CF) mit PSW3.6.90 durchgeführt. Nach einer Aufwärmphase, im Rahmen derer die Prozesskammer der Lasersintermaschine innerhalb von 120 min von Raumtemperatur auf die angegebene Bautemperatur bzw. der Starttemperatur der Temperatursuche aufgewärmt wird, werden 50 Schichten ohne Belichtung als Bodenschicht aufgelegt (= 6 mm). Nach dem Auflegen der Bodenschicht werden bei z = 6 mm entweder die 4 bis 8 Zugproben (ASTM D638, mittig im Baufeld nebeneinander positioniert, mit der parallelen Länge parallel zur x-Richtung ausgerichtet) respektive eine Baufeld füllende Matrix von 5 mal 5 Quadern zur Bestimmung der Bauteildichte (Maße: 20 mm x 4 mm x 13,56 mm, 30 mm Abstand von den Rändern) gebaut, oder die Temperatursuche (nach Beschreibung oben) begonnen. Im Anschluss an die letzte belichtete Schicht werden automatisiert weitere 3 mm Pulver aufgelegt und die Maschine mittels einer gesteuerten Abkühlphase, welche im Default-Job definiert ist innerhalb von etwa 8h auf 180°C abgekühlt, bevor die Heizungen komplett abgeschaltet wurden. Nach Erreichen der Raumtemperatur wurden die Bauteile manuell entnommen, glaskugelgestrahlt und vermessen/geprüft. Fig. 3 zeigt die Positionen der Zugproben und Dichtewürfel auf der EOS P800.

Die Baufeldgröße beträgt etwa 350 mm x 220 mm (ca. ¼ der vollen Bauplattformgröße; Bauraumverkleinerung Variante 1 für P800 in xy-Richtung gemäß Applikationsanleitung EOS PEEK-HP3).

Folgende Einstellungen wurden gewählt:
- Prozesskammertemperatur beim Bau der Zugstäbe/Dichtewürfel 280-290°C;
- Temperatur des Wechselrahmens/Bauplattform:265°C;
- Default-Job Einstellungen : PAEK3302CF_120_pre002;
- Belichtungsparameter: _EOS_increase9 (mit einem Volumenenergieeintrag Hatch: 0,273 Ws/mm³)

Enthält oder ist das thermoplastische Material ein Polymer der Klasse der Polyamide, insbesondere PA 11, wurden die Versuche auf einer P395 mit PSW 3.6.91.1 durchgeführt. Nach einer Aufwärmphase von 120 min, innerhalb derer die Maschine EOSINT P395 auf die Bautemperatur bzw. die Starttemperatur der Temperatursuche aufgewärmt wurde, wurden 6 mm (=50 Schichten) ohne belichtete Flächen als Bodenschicht aufgelegt. Mittig im Baufeld wurden 5 Zugproben in x-Ausrichtung (siehe Fig. 4, ASTM D638), sowie hinten im Baufeld ein quaderförmiges Bauteil zur Bestimmung des Verzugs (Maße 250 mm x 6 mm x 21 mm) gebaut. Im Anschluss an die letzte belichtete Schicht wurden automatisiert weitere 3 mm Leerschichten aufgelegt bevor die Heizung abgeschaltet wurde. Der Bauraum wurde im Anschluss für weitere 10 h mit Stickstoffgas gespült. Figur 4 zeigt die Position der x-Zugproben und der Verzugplatte im Baufeld der EOSINT P395 Baufeldgröße: Die Bauteile wurden in einem Abstand von mindestens 20mm zum Baufeldrand in der PSW platziert (300 mm x 300 mm).

Folgende Einstellungen wurden gewählt:
- Prozesskammertemperatur beim Bau der Zugstäbe/Verzugsplatten: 184°C
- Temperatur der Entnahmekammer: 160°C
- Default-Einstellungen:
   PA1102Black_120_001 (für PA11-basierter Pulvergemisch / Verbundwerkstoff) PA1101_120_003 (für reines PA11 Rilsan D80)
- Belichtungsparameter:
   Spezifischer Parameter für Versuche mit PA11-basiertem Pulvergemisch mit Volumenenergieeintrag Hatch: 0,250 Ws/mm³
   _Mechanic (für reines PA11 Rilsan D80)

### Bestimmung des Verzugs

Um den Verzug von Bauteilen zu quantifizieren, wird ein Quader der Maße 250mm x 6 mm x 21 mm im hinteren Teil des Bauraumes (Positionierung siehe Figur 4) gebaut. Als Maß für den Bauverzug (Verzug während des Bauvorganges) wird die Differenz in der Höhe des Quaders zwischen den Messpunkten am Rand und einem Messpunkt in der Mitte (x = 125 mm) des Quaders in Bezug auf die tatsächliche Höhe des Quaders in der Mitte in Prozent angegeben, wobei die Höhe des Quaders in der Mitte üblicherweise größer ist als an den Rändern.

Als Maß für den Abkühlverzug (Verzug nach dem Bauvorgang, resultiert im Gegensatz zum Bauverzug nicht in fehlendem Material) wird die Krümmung der Unterseite des Bauteils bei x= 125 mm (Mitte des Bauteils) angegeben, wobei die Form der gekrümmten Unterseite mathematisch mit einer Parabel angenähert wird.

Dabei gilt: f(x)=ax², mit a=0 für ein nicht verzogenes Bauteil.

Die Krümmung eines Graphen ist definiert als $κ \left(x\right) = \left(\left({\partial }^{2}f\left(x\right)\right)/\partial {x}^{2}\right) / {\left〚\left(1+{\left(\partial f\left(x\right)/\partial x\right)}^{∧}2\right)\right〛}^{∧} \left(3/2\right)$ In der Mitte des Bauteils, das dem Scheitel der Parabel entspricht, gilt demnach: κ(0)=2a.

### Optische Methoden zur Bestimmung der Partikelgrößen und Partikelform

Die Messung erfolgt auf dem Gerät Camsizer XT und dem Modul X-Jet (Firma Retsch Technology GmbH) mit der zugehörigen Software CamsizerXT64 (Version 6.6.11.1069). Die optischen Methoden zur Bestimmung der Partikelgrößen und Partikelform erfolgt gemäß Norm ISO 13322-2. Dabei wird nach Ermittlung der Geschwindigkeitsanpassung, die Probe von etwa 2 g mit 80 kPa Druckluft dispergiert und durch eine 4mm breite Durchführung an einer kalibrierten Optik-Einheit mit zwei unterschiedlich vergrößernden Kameras ("Basic" und "Zoom") vorbeigeleitet. Zur Auswertung werden mindestens 10000 Einzelbilder aufgenommen. Um eine gute optische Trennung der betrachteten Partikel zu gewährleisten, werden Bilder nur verwendet, wenn die Flächendichte der abgebildeten Partikel bei unter 3% (Kamera "Basic") bzw. unter 5% (Kamera "Zoom") liegt. Die Partikelgrößen und Formen werden anhand definierter Messparameter bestimmt. Die ermittelte Größe ist der Äquivalentdurchmesser des flächengleichen Kreises der Partikelprojektion x_area=√(4A/π). Der Meridian- bzw. Mittelwert dieser Auswertungsmethode ist mit der Laserbeugung vergleichbar (Angabe als d10, d50 und d90, d.h. als 10 %-Quantil, 50 %-Quantil und 90 %-Quantil der volumetrischen Partikelgrößenverteilung). Die Messung wird zur statistischen Messwert-Bildung mehrfach wiederholt.

Für Pulver mit hoher spezifischer Dichte >2g/cm3, oder Pulver die sich schlecht dispergieren lassen, kann es nötig sein die Methode bezüglich Probenmenge, Dispergierdruck oder die Zugabe von 1% des Rieselhilfsmittels Alu C anzupassen. Die Methodenanpassung erfolgt auf diese Weise, dass die Veränderung der Probenmenge (bis zu 8g) und des Dispergierdrucks (bis zu 150kPa) so variiert wird, dass der kleinste mögliche d90 erzielt wird.

Die Kalibrierung und die Einstellung der Kameraparameter sind gerätespezifisch durchzuführen und die Einstellung und Wartung erfolgt gemäß Herstellervorgaben. Es wurde folgende Konfiguration der Camsizer XT Software verwendet:

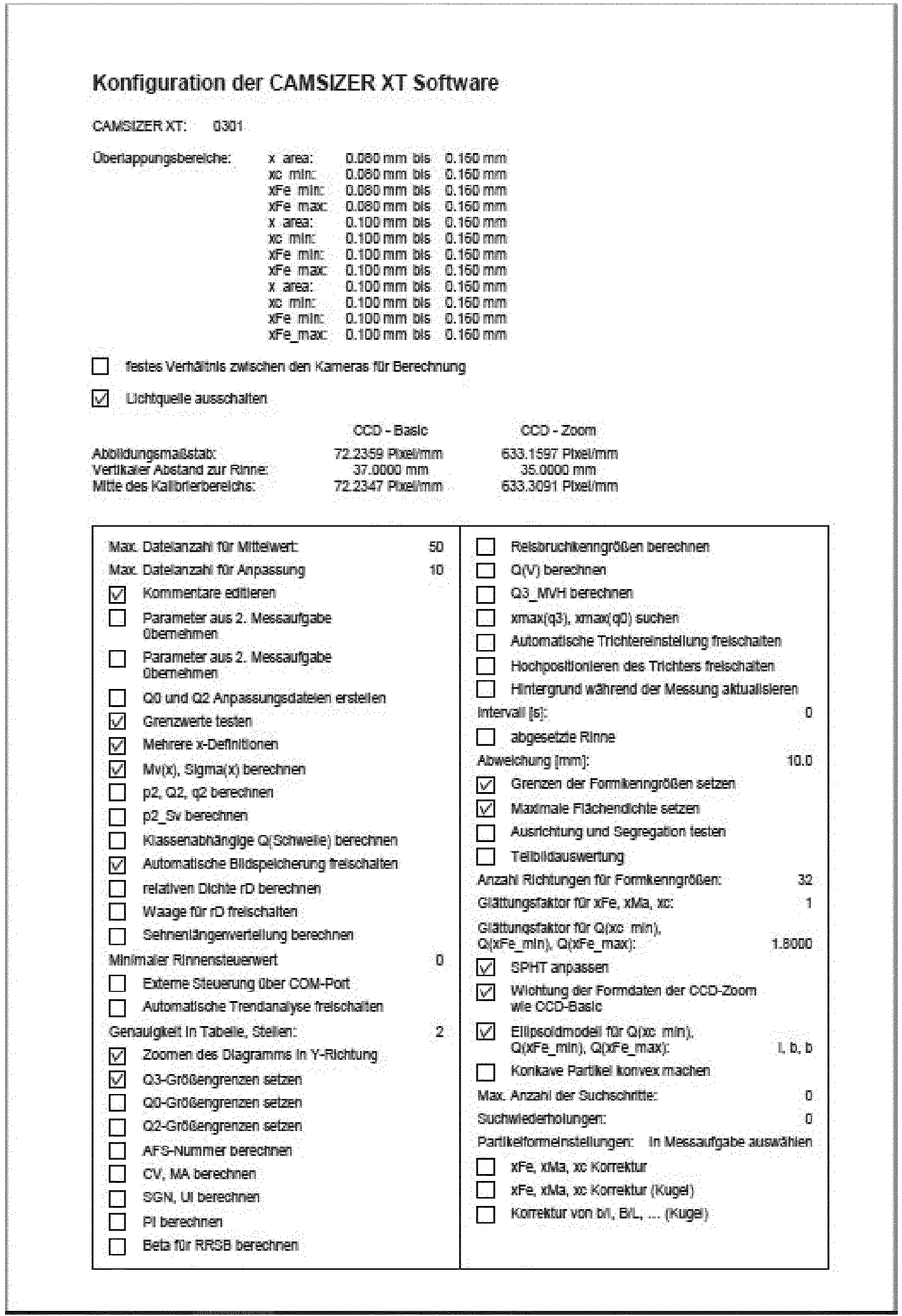

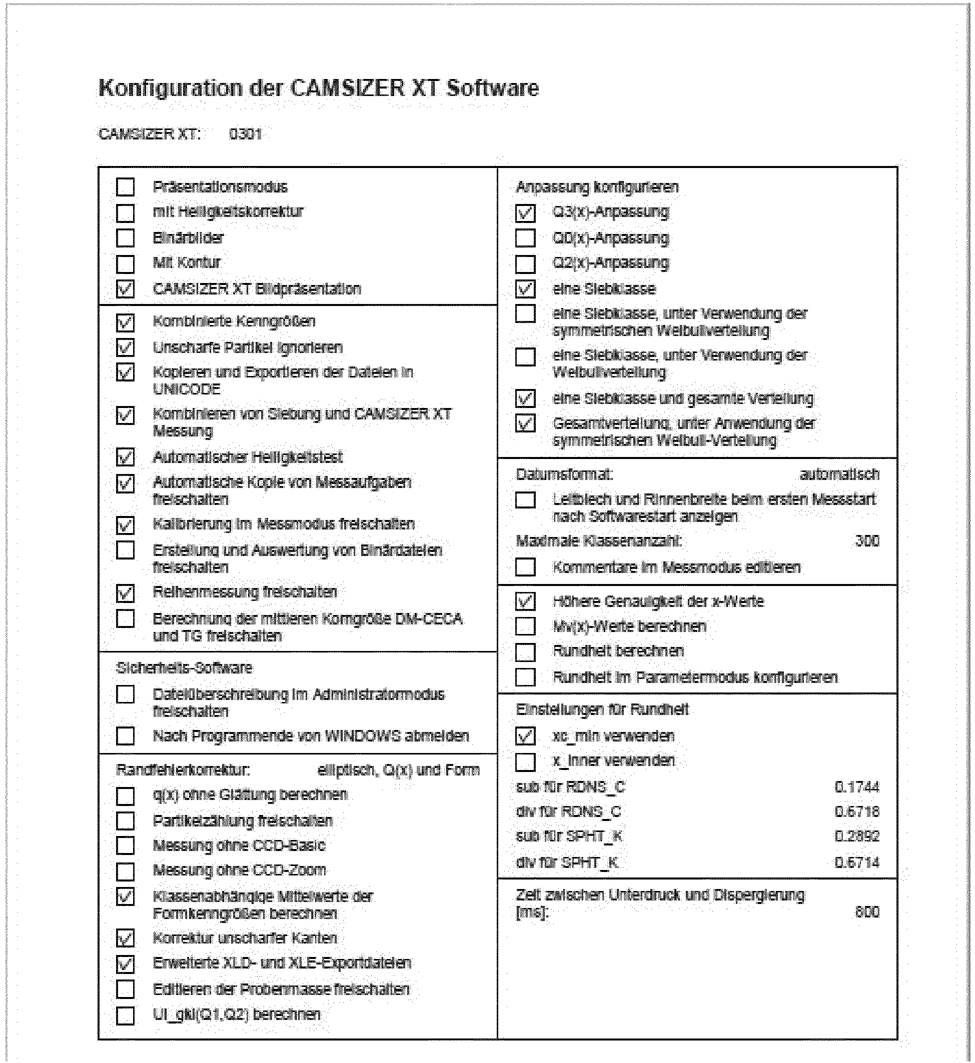

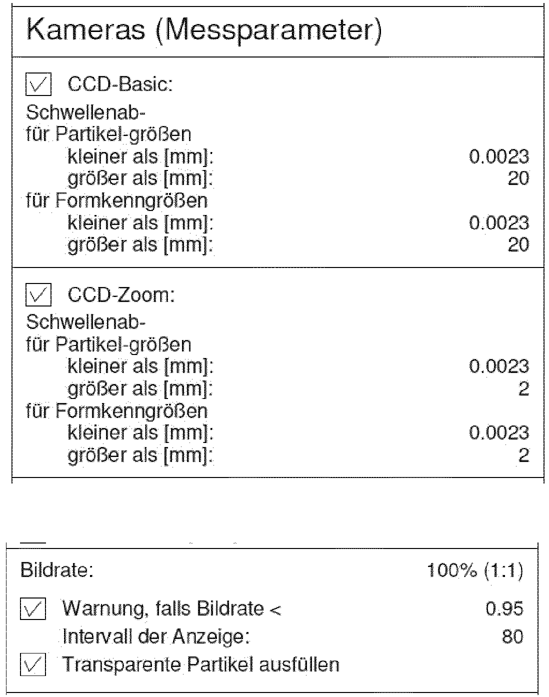

### Bestimmung der Dichte

Die Dichte der hergestellten dreidimensionalen Objekte wird gemäß ISO 1183 auf einer Kern 770-60-Waage mit einem Satorius-Dichtebestimmungsset YDK 01 gemessen. Über die Dichte kann die Porosität des Objekts bestimmt werden, wenn die theoretische Dichte von 100% kristallinem Polymer, die theoretische Dichte von amorphen Polymer und die Kristallinität des hergestellten Polymerobjekts bekannt sind. Wenn die theoretischen Dichtewerte für das Polymer nicht bekannt sind, kann die Porosität alternativ durch Mikro-Computertomographie-Messungen bestimmt werden. Ein geeignetes Gerät stellt z.B. das µ-CT40 der Firma SCANCO Medical AG, Brüttisellen, Schweiz, dar.

### Bestimmung der Kristallinität

Die Kristallinität im hergestellten Objekt kann durch Dynamische Differenzkalometrie (DKK bzw. DSC) gemäß ISO11357-1 gemessen werden. Alternativ kann die Kristallinität über Messung der Weitwinkelröntgenstreuung (WAXS) bestimmt werden.

Die nachfolgenden Beispiele dienen zur Veranschaulichung und sind nicht als einschränkend zu verstehen.

### Bestimmung des Pulveranteils des zweiten Pulvers in Volumen %:

Der Volumenanteill des zweiten Pulvers (P2) in der Gesamtmischung [zweites Pulver (P2) + erstes Pulver (P1)] kann über folgende Formel aus dem Gewicht des Pulvers und der Schüttdichte der Pulver berechnet werden. $Volumen % P 2 = \frac{Gewicht P 2 \left[g\right]}{\left(Gewicht P1+P2\right) \left[g\right]} \times \frac{Sch ü ttdichte P 1 \left[\frac{g}{cm}\right]}{Sch ü ttdichte P 2 \left[\frac{g}{cm 3}\right]} \times 100 %$

### Beispiele

In den nachfolgenden Beispielen sind Anteile in Volumenprozent angegeben soweit nicht anders angegeben.

### Beispiel 1

### Erstes Pulver (PEKK-CF 1 - Pulver mit Verstärkungsstoff)

23 Gew.-% carbonfasergefülltes PEKK Copolymer (mit Wiederholungseinheiten 60% Terephthaloylgruppe und 40% Isophtaloylgruppe) Komposit Pulver (HT23; Advanced Laser Materials, Temple, TX, USA). Der mittlere Faserdurchmesser beträgt 7µm. Die Fasern sind im Wesentlichen vollständig durch die Polymer-Matrix umhüllt. Das Pulver ist charakterisiert durch einen Schmelzflussindex (Melt Volume Rate; MVR) von 46,8 cm³/10min und T_{ei, m} bei 268,0°C. Die Schüttdichte beträgt 0,54 g/cm³, die Korngrößenverteilung ist charakterisiert durch (D₁₀/D₅₀/D₉₀): 45,9µm/84,2µm/113,1µm.

### Zweites Pulver (K6003-2, -3, -4 - Pulver ohne Verstärkungsstoff)

PEKK Copolymer mit Wiederholungseinheiten 60% Terephthaloylgruppe und 40% Isophtaloylgruppe (Kepstan 6003PF, Arkema, Frankreich) Grobpulver wird mittels Vermahlung auf einer Prallmühle bei Raumtemperatur zerkleinert und mit einem Windsichter auf die entsprechende Korngröße klassiert. Anschließend wird das Pulver mittels thermomechanischer Behandlung bei 165°C für 15 Minuten in einem handelsüblichen schnell laufenden Mischer behandelt. In einem Umluftofen mit Stickstoffatmosphäre (Typ Nabertherm N250/A) wird das Pulver bei 250°C (K6003-2), 262°C (K6003-3) beziehungsweise 270°C (K6003-4) für 3 Stunden getempert. Dazu werden pro Ofenansatz 7 kg des Pulvers in Aluminiumschalen mit einer Höhe von maximal 4cm geschichtet und für 4 Stunden getempert. Die Aufheizzeit auf die Tempertemperatur beträgt 2 Stunden. Das Pulver wird mit einer Taumelsiebmaschine (Perflux 501, Maschenweite Siebronde: 150 µm, Siebtechnik GmbH, Mühlheim, Deutschland) gesiebt um Agglomerate aufzubrechen bzw. zu entfernen.

Die Pulver sind wie in nachfolgender Tabelle 1 charakterisiert.

**Tabelle 1: Pulvercharakteristik von K6003. MVR: Schmelze-Volumenfließrate; T_{ei, m}: extrapolierte Anfangstemperatur; KGV: Korngrößenverteilung.**

| Bezeichnung | Ofentemperatur [°C] | MVR [cm³/10min] | T_{ei, m} [°C] | Schüttdichte [g/cm³] | KGV (D₁₀/D₅₀/D₉₀) [µm] |
|---|---|---|---|---|---|
| K6003-2 | 250°C | 75,9 | 256,3 | 0,38 | 34,0/66,5/123,1 |
| K6003-3 | 262°C | 76,3 | 267,1 | 0,38 | 35,5/64,9/109,8 |
| K6003-4 | 270°C | 76,3 | 272,6 | 0,38 | 33,8/62,5/100,6 |

### Komposit-Blend Pulver (Pulvergemische)

In einem handelsüblichen Betonmischer werden das erste und zweite Pulver gemäß den in nachfolgender Tabelle 2 angegebenen Bestandteilen für 20 Minuten trocken vermischt.

**Tabelle 2: Pulvercharakteristik der Pulvermischungen aus Beispiel 1**

| 1. Pulver (verstärkt) | 2. Pulver (un-verstärkt) | Anteil des 2. Pulvers | M % CF | MVR [cm3/10min] | T_{ei, m} [°C] | Schüttdichte [g/cm³] | KGV (D₁₀/D₅₀/D₉₀) [µm] |
|---|---|---|---|---|---|---|---|
| PEKK-CF 1 | K6003-2 | 10 | 21. 4 | 49.6 | 255.8 | 0,54 | 44,3/83,2/114,4 |
| PEKK-CF 1 | K6003-2 | 20 | 19. 9 | 50.9 | 255.3 | 0,51 | 42,5/81,5/114,5 |
| PEKK-CF 1 | K6003-2 | 30 | 18. 3 | 53.4 | 256.3 | 0,50 | 41,3/78,7/114,3 |
| PEKK-CF 1 | K6003-3 | 10 | 21. 4 | 50.8 | 265.1 | 0,54 | 43,5/82,4/113,5 |
| PEKK-CF 1 | K6003-3 | 20 | 19. 8 | 51.2 | 265.7 | 0,52 | 42,3/80,6/112,2 |
| PEKK-CF 1 | K6003-3 | 30 | 18. 3 | 54.5 | 265.6 | 0,51 | 41,5/79,6/113,9 |
| PEKK-CF 1 | K6003-4 | 20 | 19. 8 | 51.6 | 269.1 | 0,53 | 42,8/80,9/113,3 |
| PEKK-CF 1 | K6003-4 | 30 | 18. 3 | 54.1 | 270.2 | 0,51 | 40,6/79,3/111,8 |

### Ergebnisse

Die Wechselrahmen- und Bauplattformtemperatur betrug für alle Beispiele 265°C. Die mechanischen Daten und relevante Temperaturen sind in nachfolgender Tabelle 3 zusammengefasst.

**Tabelle 3: Mechanische Daten und relevante Temperaturen für Beispiel 1. NCT: Non-Curl Temperatur; UBT: Oberst mögliche Bautemperatur; T_{PK}: Prozesskammer-Temperatur. "-" bedeutet "nicht bestimmt"**

| 1. Pulver (verstärkt) | 2. Pulver (un-verstärkt) | Anteil des 2. Pulvers | NCT [°C] | UBT [°C] | Zugfestigkeit [MPa] | E-Modul [GPa] | Bruchdehnung [%] | T_{PK} [°C] |
|---|---|---|---|---|---|---|---|---|
| PEKK-CF 1 | -- | 0 | 281 | 295 | 92.7 | 6.9 | 1.5 | 285 |
| -- | K6003-2 | 100 | 269 | 277 | 68.3 | 4.4 | 1.6 | 277 |
| -- | K6003-3 | 100 | 276 | 285 | - | - | - | - |
| -- | K6003-4 | 100 | 281 | 289 | - | - | - | - |
| PEKK-CF 1 | K6003-2 | 10 | 265 | 287 | 91.5 | 6.6 | 1.5 | 285 |
| PEKK-CF 1 | K6003-2 | 20 | 265 | 286 | 87.6 | 6.5 | 1.5 | 285 |
| PEKK-CF 1 | K6003-2 | 30 | 265 | 285 | 89.3 | 6.1 | 1.6 | 285 |
| PEKK-CF 1 | K6003-3 | 10 | 273 | 294 | 90.5 | 6.5 | 1.5 | 285 |
| PEKK-CF 1 | K6003-3 | 20 | 270 | 291 | 88.6 | 6.1 | 1.5 | 285 |
| PEKK-CF 1 | K6003-3 | 30 | 270 | 291 | 91.6 | 6.1 | 1.6 | 285 |
| PEKK-CF 1 | K6003-4 | 20 | 276 | 290 | 90.0 | 6.1 | 1.5 | 285 |
| PEKK-CF 1 | K6003-4 | 30 | 276 | 294 | 86.3 | 6.5 | 1.5 | 285 |

Die aufgeführten Daten zeigen, dass bereits ein geringer Zusatz von 10 Vol.-% unverstärktem PEKK das mögliche Prozessfenster (Differenz zwischen unterst möglicher Bautemperatur (Non-Curl-Temperature = NCT) und oberst möglicher Bautemperatur (upper building temperature = UBT)) signifikant erhöht. Während das Prozessfenster für PEKK-CF 1 bei 14°C und bei unverstärktem PEKK (K6003-2,-3,-4) bei 7-9°C liegt, steigt es für alle Mischungen auf Werte zwischen 14°C und 21°C. Insbesondere die unterst mögliche Bautemperatur ist im Vergleich zu PEKK-CF 1 deutlich verringert, was eine Verarbeitung des Pulvergemisches bei niedrigeren Temperaturen ermöglicht und somit die Pulveralterung verlangsamt. Daraus resultiert eine geringere Veränderung der Viskosität und damit einhergehend ein besserer Auffrischfaktor.

Diese Erhöhung des Prozessfensters und damit der Prozesssicherheit geht mit einer annähernd konstanten Zugfestigkeit in Bezug auf PEKK-CF 1 und einer deutlichen Erhöhung der Zugfestigkeit im Vergleich zur unverstärkten Komponente einher.

Der Einsatz der unterschiedlichen unverstärkten Pulver zeigt, dass die Erhöhung des Prozessfensters nicht ausschließlich auf die verringerte (K6003-2) extrapolierte Anfangstemperatur des Schmelzpeaks (T_{ei, m}) im Vergleich zum verstärkten Pulver zurückzuführen ist, da die Verringerung der NCT auch für unverstärkte PEKK-Varianten zu beobachten ist, die einen T_{ei, m} ähnlich (K6003-3) oder höher (K 6003-4) als das verstärkte Pulver (PEKK-CF 1) haben. Ist T_{ei, m} des zweiten unverstärkten PEKK Pulvers niedriger (K6003-2; 256,3°C) oder annähernd gleich (K6003-3; 267,1°C) zu dem des ersten verstärkten Pulvers PEKK-CF1 (268°C), dann ist das Prozessfenster des Pulvergemischs (Differenz UBT-NCT) mit 21°C am größten, während es bei einer höheren T_{ei, m} (K6003-4; 272,6°C) mit etwa 14°C etwas geringer ist, aber immer noch größer als das des K6003-4 mit 8°C als alleiniger Komponente.

### Beispiel 2

### Erstes Pulver (PEKK-CF 2)

27 Gew.-% carbonfasergefülltes PEKK Copolymer (mit Wiederholungseinheiten 60% Terephthaloylgruppe und 40% Isophtaloylgruppe) Komposit Pulver, hergestellt analog zu HT23 (ALM, Temple, TX, USA). Das Pulver ist charakterisiert durch einen MVR-Wert von 14,8 cm³/10min und T_{ei,m} bei 268,2°C. Die Schüttdichte liegt bei 0,60 g/cm³, die Korngrößenverteilung ist charakterisiert durch (D₁₀/D₅₀/D₉₀): 429µm/85,9µm/124,5µm.

### Zweites Pulver (K6003-2)

### Analog zu Beispiel 1

### Komposit-Blend Pulver (Pulvergemische)

Analoge Herstellung zu Beispiel 1; die Mischungsverhältnisse sowie die Charakterisierung der Pulvermischungen sind in folgender Tabelle 4 aufgeführt.

**Tabelle 4: Pulvercharakteristik der Pulvermischungen aus Beispiel 2.**

| 1. Pulver (verstärkt) | 2. Pulver (un-verstärkt) | Anteil 2. Pulver | M % CF | MVR [cm³/10min] | T_{ei, m} [°C] | Schüttdichte [g/cm³] | KGV (D₁₀/D₅₀/D₉₀) [µm] |
|---|---|---|---|---|---|---|---|
| PEKK-CF 2 | K6003-2 | 10 | 25. 3 | 17.0 | 254.6 | 0,57 | 42,5/85,7/125,8 |
| PEKK-CF 2 | K6003-2 | 20 | 23. 6 | 21.5 | 254.7 | 0,56 | 42,8/84,4/127,9 |
| PEKK-CF 2 | K6003-2 | 24 | 22. 9 | 21.1 | 255.5 | 0,53 | 41,8/85,2/126,4 |
| PEKK-CF 2 | K6003-2 | 30 | 21. 9 | 21.5 | 255.5 | 0,52 | 41,4/84,7/130,9 |
| PEKK-CF 2 | K6003-2 | 40 | 20. 2 | 24.8 | 255.7 | 0,50 | 40,2/81,6/126,6 |
| PEKK-CF 2 | K6003-2 | 50 | 18. 5 | 29.7 | 255.7 | 0,48 | 40,3/80,1/125,9 |

### Ergebnisse

Die Wechselrahmen- und Bauplattformtemperatur betrug für alle Beispiele 265°C. Mechanische Daten und relevante Temperaturen sind in nachfolgender Tabelle 5 zusammengefasst.

**Tabelle 5: Mechanische Daten und relevante Temperaturen für Beispiel 2.**

| 1. Pulver (verstärkt) | 2. Pulver (un-verstärkt) | Anteil 2. Pulver | Zugfestigkei t [MPa] | E-Modul [GPa] | Bruchdehnung [%] | T_{PK} [°C] |
|---|---|---|---|---|---|---|
| PEKK-CF 2 | -- | 0 | 87.3 | 6.3 | 1.6 | 286 |
| -- | K6003-2 | 100 | 68.3 | 4.4 | 1.6 | 277 |
| PEKK-CF 2 | K6003-2 | 10 | 81.6 | 5.8 | 1.6 | 286 |
| PEKK-CF 2 | K6003-2 | 20 | 83.7 | 5.8 | 1.6 | 286 |
| PEKK-CF 2 | K6003-2 | 24 | 84.9 | 5.9 | 1.6 | 286 |
| PEKK-CF 2 | K6003-2 | 30 | 84.6 | 5.7 | 1.7 | 286 |
| PEKK-CF 2 | K6003-2 | 40 | 79.5 | 5.8 | 1.5 | 286 |
| PEKK-CF 2 | K6003-2 | 50 | 79.0 | 5.3 | 1.6 | 286 |

Die Daten aus Tabelle 5 zeigen, dass bis zu einem Volumenanteil von 30 - 40 % des unverstärkten Pulvers die Zugfestigkeit sowie den E-Modul um einen vergleichbaren Wert von 2.7 % - 8.9% (Zugfestigkeit) beziehungsweise 6.3% - 9.5% (E-Modul) abfallen und damit immer noch deutlich über den mechanischen Werten des unverstärkten Pulvers liegen. Die Bruchdehnung des sehr spröden Materials dagegen ändert sich nicht.

Beispiel 2 beinhaltet eine Mischung mit 24 Vol.-% unverstärkte Pulver. Diese Mischung entspricht einem Pulver mit einem Kohlefasergehalt von 23 Gew.-% ensprechend des verstärkten Pulvers aus Beispiel 1. Dieser Vergleich zeigt, dass sich aus dem erfindungsgemäßen Pulvergemisch ein Objekt mit ähnlichen Eigenschaften wie aus reinem, verstärktem Pulver PEKK-CF 1 herstellen lässt. Der generelle Abfall der mechanischen Eigenschaften im Vergleich zu PEKK-CF 1 ist auf das niedrigere Niveau des Ausgangsmaterials PEKK-CF 2 zurückzuführen.

### Beispiel 3

### Erstes Pulver (PEKK-CF 3)

23 Gew.-% carbonfasergefülltes PEKK Copolymer (mit Wiederholungseinheiten 60% Terephthaloylgruppe und 40% Isophtaloylgruppe) Komposit Pulver beinhaltend Fasern eines mittleren Faserdurchmessers von 5µm, hergestellt analog zu HT23 (ALM, Temple, TX, USA). Das Pulver ist charakterisiert durch einen MVR-Wert von 41,8 cm³/10min und T_{ei, m} bei 267,8°C. Die Schüttdichte liegt bei 0,55 g/cm³, die Korngrößenverteilung ist charakterisiert durch (D₁₀/D₅₀/D₉₀): 42,2µm/87,0µm/125,0µm.

### Zweites Pulver (K6003-1)

Analog Beispiel 1, K6003-2. Das Pulver wurde 4h bei 250°C getempert, hat aber eine höhere Viskosität (MVR = 50,1 cm³/10min) und einen T_{ei, m} bei 245,8°C.

### Komposit-Blend Pulver (Pulvergemische)

Analog Beispiel 1, die Mischungsverhältnisse sowie die Charakterisierung der Pulvermischungen sind in folgender Tabelle 6 aufgeführt.

**Tabelle 6: Pulvercharakteristik der Pulvermischungen aus Beispiel 3**

| 1. Pulver (verstärkt) | 2. Pulver (un-verstärkt) | Anteil 2. Pulver | M% CF | MVR [cm³/10min] | T_{ei, m} [°C] | Schüttdichte [g/cm³] | KGV (D₁₀/D₅₀/D₉₀) [µm] |
|---|---|---|---|---|---|---|---|
| PEKK-CF 3 | K6003-1 | 10 | 21.5 | 41.5 | 245.1 | 0,54 | 40,3/85,0/120,6 |
| PEKK-CF 3 | K6003-1 | 20 | 20.0 | 43.4 | 244.2 | 0,52 | *38,6*/*82,1*/*120,6* |
| PEKK-CF 3 | K6003-1 | 30 | 18.5 | 45.5 | 245.3 | 0,50 | 34,6/77,6/120,2 |

### Ergebnisse

Die Ergebnisse sind in Tabelle 7 gezeigt.

**Tabelle 7: Mechanische Daten und relevante Temperaturen für Ausführungsbeispiel 3.**

| 1. Pulver (verstärkt) | 2. Pulver (un-verstärkt ) | Anteil 2. Pulver | NCT [°C] | Zugfestigkeit [MPa] | E-Modul [GPa] | Bruchdehnung [%] | T_{PK} [°C] |
|---|---|---|---|---|---|---|---|
| PEKK-CF 3 | -- | 0 | 290 | 75.3 | 7.5 | - | 290 |
| -- | K6003-1 | 100 | 276 | 70-75 | 4.0 | - | 281 |
| PEKK-CF 3 | K6003-1 | 10 | 284 | 67.4 | 6.8 | 1.0 | 286 |
| PEKK-CF 3 | K6003-1 | 20 | 277 | 69.6 | 6.7 | 1.1 | 286 |
| PEKK-CF 3 | K6003-1 | 30 | 274 | 77.4 | 6.9 | 1.0 | 286 |

Die Ergebnisse zeigen, dass der prozessstabilisierende Effekt des Pulvergemisches unabhängig von dem Faserdurchmesser der in dem verstärkten Pulver verwendeten Kohlefasern auftritt. Auch in diesem Beispiel fällt die Zugfestigkeit nur wenig gegenüber dem reinen, 1. Pulver (verstärkt) ab, die NCT des Pulvergemisches kann bei einem Gehalt des 2. Pulvers (unverstärkt) von 30 Vol.-% dagegen sogar unter die jeweilige NCT der beiden einzelnen Komponenten gesenkt werden. Durch die damit niedrigere mögliche Bautemperatur wird ein prozessstabileres Bauen möglich. Des Weiteren wird die Recyclingfähigkeit des Pulvers verbessert, da die Pulveralterung bei niedrigeren Temperaturen verlangsamt ist.

### Beispiel 4

### Erstes Pulver (PEKK-CF 2)

Analog Beispiel 2.

### Zweites Pulver (K6003-1)

Analog Beispiel 3.

### Komposit-Blend Pulver (Pulvergemische)

Analog Ausführungsbeispiel 1. Die Mischung besteht aus 76% der ersten Pulverkomponente PEKK-CF 2 und 24% der zweiten, unverstärkten Pulverkomponente K6003-1. Die Schüttdichte liegt bei 0,54 g/cm³, die Korngrößenverteilung ist charakterisiert durch (D₁₀/D₅₀/D₉₀): 39,7µm/86,1µm/127,2µm.

### Ergebnisse

Beide Baujobs erfolgten bei einer Prozesskammertemperatur von 286°C und einer Wechselrahmen- bzw. Bauplattformtemperatur von 260°C. Verteilt über das verkleinerte Baufeld der EOS P800 werden 25 massive Quader mit den Maßen 20mm x 4mm x 13,56mm gebaut. Die Ergebnisse sind in Figur 5 gezeigt. Während bei dem reinen, verstärkten Pulver PEKK-CF 2 (rechts) 15 der 25 Quader Einfallstellen aufweisen, weisen die Quader, die mit dem erfindungsgemäßen Pulvergemisch mit 24 Vol.-% K6003-1 (links) gebaut worden sind, keine Einfallstellen auf. Dieses Beispiel verdeutlicht die verlangsamte Pulveralterung des erfindungsgemäßen Pulvergemisches. Die Versuche weisen darauf hin, dass eine bessere Auffrischung möglich ist.

### Beispiel 5

### Erstes Pulver (HP11-30)

30 Gew.-% carbonfasergefülltes Polyamid 11 Komposit Pulver (HP11-30; Advanced Laser Materials, Temple, TX, USA). Der mittlere Faserdurchmesser beträgt 7µm. Die Fasern sind im Wesentlichen vollständig durch die Polymer-Matrix umhüllt.

### Zweites Pulver (PA11 D80)

Polyamid 11 Pulver (Rilsan d80, Arkema, France).

### Komposit-Blend Pulver (Pulvergemische)

In einem handelsüblichen Betonmischer werden die erste und zweite Pulverkomponente gemäß den in Tabelle 8 angegebenen Bestandteilen für 20 Minuten trocken vermischt.

**Tabelle 8: Pulvercharakteristik der Pulvermischungen aus Beispiel 5**

| 1. Pulver (verstärkt) | 2. Pulver (un-verstärkt) | Anteil 2. Pulver | M% CF | MVR [cm³/10min] | T_{ei, m} [°C] | Schüttdichte [g/cm³] | KGV (D₁₀/D₅₀/D₉₀) [µm] |
|---|---|---|---|---|---|---|---|
| HP11-30 | -- | 0 | 30.0 | 80.9 | 166.9 | 0,41 | 40,4/80,4/118,8 |
| -- | PA11 D80 | 100 | 0.0 | 52.6 | 177.5 | 0,48 | 58,5/104,3/156,3 |
| HP11-30 | PA11 D80 | 10 | 26.6 | 76.4 | 167.4 | 0,42 | 41,0/80,8/118,7 |
| HP11-30 | PA11 D80 | 20 | 23.2 | 63.7 | 170.5 | 0,42 | 41,6/84,9/134,3 |
| HP11-30 | PA11 D80 | 30 | 20.0 | 57.1 | 169.0 | 0,42 | 44,4/87,2/139,8 |
| HP11-30 | PA11 D80 | 50 | 13.8 | 42.2 | 177.8 | 0,43 | 48,0/90,0/143,3 |

### Ergebnisse

Die Prozesskammertemperatur betrug für alle Versuche 184°C, die Entnahmekammertemperatur 160°C. Die Ergebnisse sind in Tabelle 9 zusammengefasst.

**Tabelle 9: Mechanische Daten und relevante Temperaturen.**

| 1. Pulver (verstärkt) | 2. Pulver (un-verstärkt) | Anteil 2. Pulver | NCT [°C] | UBT [°C] | Zugfestigkeit [MPa] | E-Modul [GPa] | Bruchdehnun g [%] |
|---|---|---|---|---|---|---|---|
| HP11-30 | -- | 0 | 182 | 185 | 56.3 | 2.7 | 9.6 |
| -- | PA11 D80 | 100 | 179 | 188 | 52.1 | 1.5 | 41.0 |
| HP11-30 | PA11 D80 | 10 | 177 | 185 | 56.9 | 2.6 | 15.4 |
| HP11-30 | PA11 D80 | 20 | 176 | 185 | 56.4 | 2.5 | 16.8 |
| HP11-30 | PA11 D80 | 30 | 176 | 185 | 56.2 | 2.4 | 18.0 |
| HP11-30 | PA11 D80 | 50 | 176 | 185 | 54.6 | 2.1 | 34.2 |

In diesem Beispiel wurde als Grundwerkstoff ein Polyamid-11 eingesetzt, das in der verstärkten Variante 30 Gew.-% Kohlefasern enthält. Vergleichbar mit Beispiel 3 kann auch hier beobachtet werden, dass die NCT bei Zumischen von unverstärktem PA11 (PA11 D80) unter die jeweilige NCT der einzelnen Pulver, bei annähernd gleicher oberer Bautemperatur (UBT), gesenkt werden kann. Diese Absenkung der NCT erweitert das Prozessfenster um 5 - 6°C und ermöglicht einen prozessstabileren Bau. Bis zu einem Gehalt von einschließlich 30 Vol.-% des unverstärkten Pulvers bleibt die Zugfestigkeit der fabrizierten Testkörper annähernd gleich, zu der des reinen, verstärkten Pulvers (HP11-30). Der E-Modul reduziert sich in diesem Bereich nur geringfügig um 3,7% - 11,1% und bleibt dabei aber noch immer um ca. 60% über dem E-Modul des reinen, unverstärkten Pulvers (PA11 D80). Bei ähnlichen mechanischen Eigenschaften liegt die Bruchdehnung im Bereich bis 30 Vol.-% des unverstärkten Pulvers bei etwa 60 % - 88 % über der Bruchdehnung des reinen, verstärkten Pulvers. Die Bauteile weisen also eine deutlich höhere Zähigkeit auf als beim reinen verstärkten Pulver (HP11-30).

Tabelle 10 listet Werte für den Bau- und Abkühlverzug auf.

**Tabelle 10: Abkühl- und Bauverzug im Beispiel 5**

| 1. Pulver (verstärkt) | 2. Pulver (unverstärkt) | Anteil 2. Pulver | Verzug [Krümmung=κ] | Bauverzug [%] |
|---|---|---|---|---|
| HP11-30 | -- | 0 | 2.96 | 8.8 |
| -- | PA11 D80 | 100 | | |
| HP11-30 | PA11 D80 | 10 | 1.50 | 2.8 |
| HP11-30 | PA11 D80 | 20 | 1.22 | 1.7 |
| HP11-30 | PA11 D80 | 30 | 1.06 | 0.6 |
| HP11-30 | PA11 D80 | 50 | 0.18 | 0.5 |

Hier wird deutlich, dass reines HP11-30 einen signifikanten Verzug aufweist, der aber mit steigendem Gehalt an PA11 D80 deutlich geringer wird, ohne dass Zugfestigkeit und E-Modul signifikant verringert werden. Insbesondere ein hoher Bauverzug führt zu sehr instabilen Bauprozessen, da belichtete Bauteile beim Pulverauftrag, ähnlich zum Curl, von der Beschichtungseinheit herausgerissen werden können. Augenfällig ist, wie stark sich der sogenannte Abkühlverzug (Spalte 4, Verzug [κ]) verringert.

Lasersinter-Bauteile zeichnen sich häufig durch eine hohe Kristallinität aus, was zu vergleichsweise spröden Bauteilen mit geringer Bruchdehnung (verglichen zu Bauteilen aus dem Spritzguss) führt. Es ist zu sehen, dass sich die Bruchdehnung im Vergleich zu Bauteilen aus der reinen, verstärkten Komponente schon bei geringer Zumischung von unverstärktem Pulver merklich verbessern, die Bruchfestigkeit dabei aber quasi gleich bleibt. Dadurch lässt sich das Verhältnis von E-Modul und Bruchdehnung quasi anwendungsspezifisch einstellen.

Aus Beispiel 5 ergibt sich zusammenfassend, dass durch das erfindungsgemäße Pulvergemisch ein Objekt hergestellt werden kann, das bei vergleichbarer Zugfestigkeit und nur wenig verringertem E-Modul eine höhere Bruchdehnung und damit eine höhere Duktilität aufweisen kann. Gleichzeitig weist das Pulvergemisch eine deutlich verringerte Verzugsneigung und zusammen mit der verringerten unteren Bautemperatur eine wesentlich höhere Prozessstabilität auf.

Aus Beispielen 1 bis 5 ergibt sich, dass durch das erfindungsgemäße Pulvergemisch Objekte hergestellt werden können, deren mechanische Eigenschaften gegenüber Objekten aus reinem, verstärkten Pulver (reiner Komposit) nur geringfügig abfallen, teils sogar eine höhere Bruchdehnung aufweisen, aber der Bauprozess bei niedrigeren Temperaturen und bei erhöhter Prozessstabilität durchgeführt werden kann.

Ein weiterer Vorteil der Komposit Blend Pulver ist eine Verbesserung des Auffrischfaktors gegenüber reinen Komposit Pulvern: Faserverstärkte Kompositpulver, bei denen der Füllstoff durch den Herstellprozess im Pulverkorn vorliegt (hergestellt durch z.B. Schmelzcompoundierung mit Vermahlung, Schmelzsprühen, Fällung aus Lösungsmittel), haben den Vorteil, dass es beim Beschichtungsprozess zu deutlich verringerter Vorzugsrichtung der Fasern in Beschichtungsrichtung kommt. Dadurch werden Bauteile mit deutlich isotroperen Bauteileigenschaften (v.a beim E-Modul) in xyz-Richtung erhalten, als dies bei Dry-Blends aus Faser und Thermoplastpulver der Fall ist. Nachteilig bei den Faserin-Korn Kompositen ist allerdings, dass die Schmelzviskosität und Oberflächenspannung des Pulverkorns deutlich höher liegt, wodurch sich ein qualitativ schlechterer und rauerer Schmelzfilm beim Aufschmelzen durch die Belichtungseinheit ausbildet. Durch das Dry-Blending des Komposit-Pulvers mit einem unverstärktem PEKK, welches vorzugsweise eine geringere Schmelzviskosität als das PEKK-CF aufweist (höherer MVR-Wert), kommt es zu einer verbesserten Schmelzefilmbildung. Dies, zusammen mit der Möglichkeit, bei niedrigeren Temperaturen zu bauen, führt zu einer Verbesserung des Auffrischfaktors des Komposit Blends gegenüber dem reinen Komposit und zu einer verbesserten Wirtschaftlichkeit. Dies zeigt Beispiel 4 eines PEKK mit 27% Carbonfaseranteil. Während Bauteile (Dichtewürfel) des reinen Komposits PEKK- Einfallstellen aufweisen, zeigen die Bauteile des Komposit Blend Pulvers mit 24% PEKK Anteil keine Einfallstellen.

Des Weiteren kann die verringerte Kristallisationsneigung der Komposit Blend Pulver zu einem verringerten Verzug der Bauteile führen. Dadurch kann mit dem Komposit Blend bei einer niedrigeren Wechselrahmentemperatur und/oder Prozesskammertemperatur gearbeitet werden als beim reinen Komposit. Dies führt zu einer verringerten Alterung des Pulvers im Prozess und zu einer verbesserten Auffrischrate.

## Patentansprüche

1. Pulvergemisch für die Verwendung als Aufbaumaterial zum Herstellen eines dreidimensionalen Objekts durch schichtweises Verfestigen des Aufbaumaterials an den dem Querschnitt des dreidimensionalen Objekts in der jeweiligen Schicht entsprechenden Stellen, insbesondere durch Einwirkung von Strahlung,
wobei das Pulvergemisch ein erstes Pulver und eine zweites Pulver enthält,
wobei das erste Pulver Pulverteilchen eines ersten thermoplastischen Polymermaterials und einen Verstärkungsstoff enthält,
wobei der Verstärkungsstoff zumindest teilweise in die Pulverteilchen des ersten Pulvers eingebettet ist und/oder an deren Oberfläche haftet,
wobei das zweite Pulver Pulverteichen eines zweiten thermoplastischen Polymermaterials enthält, welches gleich oder verschieden ist wie das erste thermoplastische Polymermaterial,
wobei die Pulverteilchen des zweiten Pulvers den Verstärkungsstoff nicht oder nur in einem Anteil von höchstens 50 Gew-% bezogen auf den Anteil des Verstärkungsstoffes in oder auf den Pulverteilchen des ersten Pulvers enthalten,
und wobei das Pulvergemisch eine Schüttdichte von 0,35 bis 0,70 g/cm³ aufweist.

2. Pulvergemisch nach Anspruch 1,
wobei das Pulvergemisch durch eine unterst mögliche Bautemperatur in einem vordefinierten Verfahren zum Herstellen eines dreidimensionalen Objekts durch schichtweises Verfestigen eines pulverförmigen Aufbaumaterials an den dem Querschnitt des dreidimensionalen Objekts in der jeweiligen Schicht entsprechenden Stellen durch Einwirkung von Strahlung charakterisiert ist, die im Vergleich zur unterst möglichen Bautemperatur des ersten Pulvers alleine niedriger, vorzugsweise um 1°C niedriger, weiter bevorzugt um 2°C niedriger, insbesondere um 5°C niedriger ist, wobei die unterst mögliche Bautemperatur durch diejenige Prozesskammertemperatur definiert, bei der durch den Beschichtungsvorgang gerade keine Bauteile herausgerissen werden ("Non-Curl Temperatur", NCT).

3. Pulvergemisch nach einem der vorhergehenden Ansprüche,
wobei das Pulvergemisch durch ein Prozessfenster charakterisiert ist, das im Vergleich zum Prozessfenster des ersten Pulvers alleine gleich oder größer ist, vorzugsweise größer ist,
wobei das Prozessfenster als Differenz zwischen oberst möglicher Bautemperatur und unterst möglicher Bautemperatur in einem vordefinierten Verfahren zum Herstellen eines dreidimensionalen Objekts durch schichtweises Verfestigen eines pulverförmigen Aufbaumaterials an den dem Querschnitt des dreidimensionalen Objekts in der jeweiligen Schicht entsprechenden Stellen durch Einwirkung von Strahlung definiert ist, wobei die unterst mögliche Bautemperatur durch diejenige Prozesskammertemperatur definiert, bei der durch den Beschichtungsvorgang gerade keine Bauteile herausgerissen werden ("Non-Curl Temperatur", NCT).

4. Pulvergemisch nach einem der vorhergehenden Ansprüche,
wobei das thermoplastische Polymermaterial des ersten Pulvers und/oder das thermoplastische Polymermaterial des zweiten Pulvers ein Polymermaterial ist, das aus der aus Homopolymeren, Copolymeren und Polyblends bestehenden Gruppe ausgewählt ist,
wobei vorzugsweise das thermoplastische Polymermaterial des ersten Pulvers und/oder das thermoplastische Polymermaterial des zweiten Pulvers ein Polymer umfasst ausgewählt aus der Gruppe bestehend aus Polyetherimide, Polycarbonate, Polyarylensulfide, Polyarylethersulfone, Polyphenylenoxide, Polyethersulfone, Acrylnitril-Butadien-Styrol-Copolymerisate, Acrylnitril-Styrol-Acrylat-Copolymerisate (ASA), Polyvinylchlorid, Polyacrylate, Polyester, Polyamide, Polyaryletherketone, Polyether, Polyurethane, Polyimide, Polyamidimide, Polysiloxane, Polyolefine und Copolymere, welche mindestens zwei verschiedene Wiederholungseinheiten der vorgenannten Polymere aufweisen, sowie Polymerblends davon, weiter bevorzugt ein Polymer der Klasse der Polyaryletherketone, Polyphenylensulfide, Polycarbonate, Polyetherimide, Polypropylen, Polyethylen und Polyamide und deren Copolymeren und Polymerblends,
wobei vorzugsweise das thermoplastische Polymermaterial des ersten Pulvers und/oder das thermoplastische Polymermaterial des zweiten Pulvers ein Polyetherketonketon (PEKK), ein Polyamid 11 (PA 11), ein Polyamid 12 (PA 12) oder ein Polyamid 6 (PA 6) umfasst, insbesondere das Polymermaterial Polyaryletherketon (PAEK) ist, weiter bevorzugt aus der aus Polyetheretherketon (PEEK), Polyetherketonketon (PEKK), Polyetherketon (PEK), Polyetheretherketonketon (PEEKK), Polyetherketonetherketonketon (PEKEKK), Polyetheretheretherketon (PEEEK), Polyetheretherketon-Polyetherdiphenyletherketon (PEEK-PEDEK) und Copolymeren, die mindestens eines der vorgenannten Polymere einschließen, bestehenden Gruppe ausgewählt wird, das Polymermaterial insbesondere PEKK umfasst oder daraus besteht.
wobei im Fall von Polyetherketonketon (PEKK), die mit zwei Carbonylgruppen verbunden sind, die Carbonylgruppen zu mindestens 10%, bevorzugt zu 60% und/oder zu höchstens 70% in para-Stellung und ansonsten in meta-Stellung stehen.

5. Pulvergemisch nach einem der vorhergehenden Ansprüche,
wobei der Verstärkungsstoff derart im Korn der Pulverteilchen des ersten Pulvers eingebettet ist, dass die Oberfläche von wenigstens 50 Volumenprozent der Pulverteilchen des ersten Pulvers frei von oberflächlich sichtbarem bzw. durch geeignete optische oder anderweitige Analyseverfahren feststellbarem Verstärkungsstoff sind.

6. Pulvergemisch nach einem der vorhergehenden Ansprüche,
wobei der Verstärkungsstoff ausgewählt ist aus der Gruppe bestehend aus:
(a) er umfasst oder besteht aus Fasern, wobei bevorzugt die Fasern ausgewählt sind aus der Gruppe, die aus Carbonfasern, organischen Fasern und bevorzugt Aramidfasern, anorganischen Fasern und bevorzugt Glasfasern und/oder Borfasern und/oder Wollastonitfasern und/oder Mineralfasern, und Kombinationen davon besteht;
(b) er umfasst oder besteht aus Nanoröhrchen, bevorzugt Kohlenstoff-Nanoröhrchen;
(c) er umfasst oder besteht aus Graphit-Nanoplättchen und/oder Fullerenen;
(d) er umfasst oder besteht aus plättchenförmigen Partikeln, vorzugsweise Schichtsilikat und weiter bevorzugt Glimmer, (2:1)-Dreischichtsilikate und vorzugsweise Montmorillonit, Hektorit oder organophil modifizierte, kationengetauschte Dreischichtsilikate;
(e) er umfasst oder besteht aus sphärischen Füllstoffen oder unregelmäßig geformten Füllstoffen mit einem geringem Aspektverhältnis, vorzugsweise anorganische und mineralische Füllstoffe, vorzugsweise Glaskugeln, Glashohlkugeln oder Quarzmehl, Talkum, Calciumcarbonat, kugelförmige Kreidepartikel, Kaoline, amorphe Kieslsäuren, Silikate, keramische Teilchen und vorzugsweise Bornitrit, Aluminiumoxid, Zirkoniumoxid, Siliciumdioxid, Zirconium(IV)-oxid, Titan (IV)-oxid, Aluminiumtitanat, Bariumtitanat, Siliziumcarbid (SiC)- und Borcarbid (B4C), Metalle und vorzugsweise Bronze- oder Aluminiumpulver, Farbpigmente und vorzugsweise Titandioxid, Ruß und organische Füllstoffe, vorzugsweise elastomere Füllstoffpartikel auf Basis von EPDM oder EPR;
(f) er umfasst oder besteht aus Flammschutzmitteln, insbesondere aus der Klasse der anorganischen Flammschutzmittel, vorzugsweise anorganische Phosphorverbindungen, Metalloxide, Metallhydroxide, Metallsalze, Bor- und Zinkverbindungen, Siliziumverbindungen, Graphit und/oder stickstoffbasierte Flammschutzmittel auf Basis von Melamin.

7. Pulvergemisch nach einem der vorhergehenden Ansprüche,
wobei die mittlere Korngröße d₅₀ der Pulverteilchen des ersten und/oder des zweiten Pulvers mindestens 20 µm, bevorzugt mindestens 40 µm, besonders bevorzugt mindestens 70 µm und/oder höchstens 150 µm, bevorzugt höchstens 110 µm, besonders bevorzugt höchstens 90 µm beträgt,
wobei insbesondere die mittlere Korngröße d50 des ersten und/oder zweiten Pulvers wie folgt ist:
a) 40 bis 70 µm für das zweite Pulver und/oder 40 bis 70 µm für das erste Pulver, sofern das erste Pulver durch eines oder mehrere der folgenden Merkmale aufweist: es ist im Wesentlichen frei von Mikrofasern, es umfasst sphärische Verstärkungsstoffe im Mikrometerbereich, es umfasst Verstärkungsstoffe im Mikrometerbereich mit einem Aspektverhältnis von kleiner 3:1, es umfasst Nanofasern, und/oder es umfasst Verstärkungsstoffe, die zumindest in einer Dimension im Nanometerbereich liegen; und/oder
b) 40 bis 70 µm für das zweite Pulver und/oder 70 bis 100 µm für das erste Pulver, sofern das erste Pulver Mikrofasern umfasst.

8. Pulvergemisch nach einem der vorhergehenden Ansprüche,
wobei der Anteil des zweiten Pulvers mindestens 1 Volumenprozent, bevorzugt 5 Volumenprozent, weiter bevorzugt 10 Volumenprozent, weiter bevorzugt 15 Volumenprozent und besonders bevorzugt 20 Volumenprozent und/oder höchstens 70 Volumenprozent, bevorzugt höchstens 60 Volumenprozent, weiter bevorzugt höchstens 40 Volumenprozent und besonders bevorzugt höchstens 30 Volumenprozent, jeweils bezogen auf das Gesamtvolumen des Pulvergemisches, beträgt.

9. Pulvergemisch nach einem der vorhergehenden Ansprüche mit einer oder mehreren der Eigenschaften (i) bis (iv):
(i) die Schüttdichte beträgt 0,4 bis 0,65 g/cm³, weiter bevorzugt mindestens 0,45 oder mindestens 0,5 und/oder höchstens 0,6 g/cm³;
(ii) die BET-Oberfläche beträgt <10m²/g, vorzugsweise <5m²/g, besonders bevorzugt <3m²/g und insbesondere <1m²/g;
(iii) der MVR Wert des zweiten Pulvers ist niedriger oder höher als der MVR-Wert des ersten Pulvers, jeweils bestimmt mit der gleichen Methode, wobei bevorzugt der MVR-Wert des zweiten Pulvers 0,1 bis 10 mal des Wertes des ersten Pulvers beträgt, weiter bevorzugt der MVR-Wert des zweiten Pulvers 0,25 bis 5, besonders bevorzugt 0,5 bis 4, insbesondere größer 1 bis 3 und ganz besonders bevorzugt 1,1 bis 2 mal des Wertes des ersten Pulvers beträgt, wobei der MVR-Wert wie in der Beschreibung definiert bestimmt ist;
(iv) der Schmelzpunkt und/oder die extrapolierte Anfangstemperatur (T_{ei, m}) des zweiten Pulvers liegt begrenzt niedriger oder höher als der des ersten Pulvers, vorzugsweise liegt um maximal 30°C niedriger oder höher, besonders bevorzugt liegt um maximal 20°C, insbesondere um maximal 10°C und besonders bevorzugt um maximal 5°C und ganz besonders bevorzugt um maximal 3°C, 2°C oder 1°C niedriger oder höher, ganz besonders bevorzugt ist diese gleich oder wie vorbezeichnet niedriger,
wobei der Schmelzpunkt gemäß DIN EN ISO 11357 bestimmt ist.

10. Verfahren zum Herstellen eines Pulvergemischs für die Verwendung als Aufbaumaterial zum Herstellen eines dreidimensionalen Objekts durch schichtweises Verfestigen des Aufbaumaterials an den dem Querschnitt des dreidimensionalen Objekts in der jeweiligen Schicht entsprechenden Stellen, insbesondere durch Einwirkung von Strahlung,
wobei das erste Pulver und das zweite Pulver wie in einem der vorhergehenden Ansprüchen definiert sind und in einem gewünschten Mischungsverhältnis durch Trockenmischung miteinander vermischt werden, wobei optional das erste Pulver und/oder das zweite Pulver gemäß einem der Verfahren (i) bis (vii) hergestellt werden:
(i) durch Vermahlung, vorzugsweise Schmelz-Compoundierung und Vermahlung oder kryogene Vermahlung;
(ii) durch Schmelzsprühen;
(iii) durch Fällung aus Lösungsmitteln;
(iv) durch Schmelz-Compoundierung und Schmelzdispergierung;
(v) durch Schmelzcompoundierung und durch Faserspinnen und Faserschneiden, wobei nach dem Spinnen die Fasern gegebenenfalls zur Erhöhung des kristallinen Anteils gereckt werden;
(vi) durch Coating des Polymers auf den Füllstoff, oder des Füllstoffs auf das Polymer durch eine mechanische oder thermomechanische Behandlung; oder
(vii) durch Coating des Polymers auf den Füllstoff, oder des Füllstoffs auf das Polymer durch Sprühcoating mit Lösungsmittel oder Sprühtrocknung.

11. Verfahren nach Anspruch 10,
wobei die Herstellung des ersten und/oder des zweiten Polymerpulvers die Schritte einschließt, dass ein Polymermaterial geschmolzen wird und mindestens ein Verstärkungsstoff, vorzugsweise der in Anspruch 6 definierte Verstärkungsstoff, in die Schmelze compoundiert/eingearbeitet wird, dann entweder noch während dieses Schritts des Compoundierens/Einarbeitens oder nach dem Eincompoundieren/Einarbeiten die den Verstärkungsstoff enthaltende Schmelze gesponnen wird, die resultierenden gesponnenen Fasern optional oder bevorzugt gereckt werden und dann die den Verstärkungsstoff enthaltenden Fasern granuliert oder geschnitten werden und gegebenenfalls, um vorzugsweise eine wie in Anspruch 7 definierte Korngrößencharakeristik und/oder eine oder mehrere der im Anspruch 9 definierten Eigenschaft(en) (i) bis (iii) zu erhalten, einer Verrundungsbehandlung unterzogen werden.

12. Verfahren zum Herstellen eines dreidimensionalen Objekts durch schichtweises Verfestigen eines pulverförmigen Aufbaumaterials an den dem Querschnitt des dreidimensionalen Objekts in der jeweiligen Schicht entsprechenden Stellen, insbesondere durch Einwirkung von Strahlung,
wobei als Aufbaumaterial das Pulvergemisch nach einem der Ansprüche 1 bis 10 verwendet wird.

13. Dreidimensionales Objekt, welches durch schichtweises Verfestigen eines pulverförmigen Aufbaumaterials an den dem Querschnitt des dreidimensionalen Objekts in der jeweiligen Schicht entsprechenden Stellen, insbesondere durch Einwirkung von Strahlung, hergestellt worden ist, wobei das dreidimensionale Objekt einen Verstärkungsstoff enthält, der in mindestens einem inneren Teil oder im gesamten inneren Teil des dreidimensionalen Objekts ungleich verteilt ist, erhältlich durch Verwendung des Pulvergemischs nach einem der vorhergehenden Ansprüche 1 bis 10.

14. Verwendung eines Pulvergemischs gemäß einem der Ansprüche 1 bis 9 zur Erhöhung der Auffrischrate, Verbesserung des Verzugs und/oder Verbesserung der mechanischen Eigenschaften eines dreidimensionalen Objekts, das durch schichtweises Verfestigen des als Aufbaumaterial dienenden Pulvergemischs an den dem Querschnitt des dreidimensionalen Objekts in der jeweiligen Schicht entsprechenden Stellen, insbesondere durch Einwirkung von Strahlung, hergestellt wurde, insbesondere wobei eine oder mehrere der folgenden Veränderungen (i) bis (vii) erhalten werden:
(i) im Vergleich zu einem Bauteil, das nur aus dem zweiten Pulver als Aufbaumaterial hergestellt wurde, ist der E-Modul höher, bevorzugt um mindestens 10 %, weiter bevorzugt um mindestens 20 % und insbesondere um mindestens 30 % oder gar um mindestens 40 % oder mindestens 50% höher;
(ii) im Vergleich zu einem Bauteil, das nur aus dem ersten Pulver als Aufbaumaterial hergestellt wurde, ist der E-Modul um höchstens 25 %, bevorzugt um höchstens 20 %, weiter bevorzugt um höchstens 15 % und insbesondere um höchstens 10 % niedriger;
(iii) im Vergleich zu einem Bauteil, das nur aus dem ersten Pulver als Aufbaumaterial hergestellt wurde, ist der Auffrischfaktor höher, wobei ein höherer Auffrischfaktor vorzugsweise durch eine geringere Anzahl an Einfallstellen gekennzeichnet ist.
(iv) im Vergleich zu einem Bauteil, das nur aus dem ersten Pulver als Aufbaumaterial hergestellt wurde, ist die Vorzugsrichtung des Funktionsadditivs, bevorzugt des Verstärkungsstoffs und insbesondere der Fasern, geringer und/oder ist die Isotropie in xyz-Richtung höher, insbesondere in Bezug auf den E-Modul;
(v) im Vergleich zu einem Bauteil, das nur aus dem ersten Pulver als Aufbaumaterial hergestellt wurde, ist die Porosität geringer.
(vi) im Vergleich zu einem Bauteil, das nur aus dem zweiten Pulver als Aufbaumaterial hergestellt wurde, ist die maximale Zugfestigkeit (UTS) höher, bevorzugt um 5 %, weiter bevorzugt um 10 % und insbesondere um 15 % höher;
(vii) im Vergleich zu einem Bauteil, das nur aus dem ersten Pulver als Aufbaumaterial hergestellt wurde, ist die maximale Zugfestigkeit (UTS) um höchstens 15% niedriger, bevorzugt um höchstens 10% niedriger, besonders bevorzugt um höchstens 5% niedriger.
(viii) im Vergleich zu einem Bauteil, das nur aus dem ersten Pulver als Aufbaumaterial hergestellt wurde, ist die Bruchdehnung höher, bevorzugt um 10 %, weiter bevorzugt um 30 % und insbesondere um 50 % höher oder gar um 100% höher.

## Claims

1. Powder mixture for the use as a building material for manufacturing a three-dimensional object by solidifying the building material layer by layer at the positions corresponding to the cross-section of the three-dimensional object in the respective layer, in particular by exposure to radiation,
wherein the powder mixture contains a first powder and a second powder,
wherein the first powder contains powder particles of a first thermoplastic polymer material and a reinforcement material,
wherein the reinforcement material is at least partially embedded in the powder particles of the first powder and/or adhered to the surface of the powder particles of the first powder,
wherein the second powder contains powder particles of a second thermoplastic polymer material which is the same as or different from the first thermoplastic polymer material,
wherein the powder particles of the second powder do not contain the reinforcement material or contain it only in an amount of at most 50% by weight relative to the amount of the reinforcement material in or on the powder particles of the first powder, and
wherein the powder mixture has a bulk density of 0.35 to 0.70 g/cm³.

2. Powder mixture according to claim 1,
wherein the powder mixture is **characterized by** a lowest possible building temperature in a predefined process for manufacturing a three-dimensional object by solidifying a pulverulent building material layer by layer at the positions corresponding to the cross-section of the three-dimensional object in the respective layer by exposure to radiation, which is lower than the lowest possible building temperature of the first powder alone, preferably lower by 1°C, more preferably lower by 2°C, in particular lower by 5°C, wherein the lowest possible building temperature is defined by the process chamber temperature at which no components are torn out by the coating process ("non-curl temperature", NCT).

3. Powder mixture according to any one of the preceding claims,
wherein the powder mixture is **characterized by** a process window which is equal to or larger, preferably larger, compared to the process window of the first powder alone,
wherein the process window is defined as the difference between the highest possible building temperature and the lowest possible building temperature in a predefined process for manufacturing a three-dimensional object by solidifying a pulverulent building material layer by layer at the positions corresponding to the cross-section of the three-dimensional object in the respective layer by exposure to radiation, wherein the lowest possible building temperature is defined by the process chamber temperature at which no components are torn out by the coating process ("non-curl temperature", NCT).

4. Powder mixture according to any one of the preceding claims,
wherein the thermoplastic polymer material of the first powder and/or the thermoplastic polymer material of the second powder is a polymer material selected from the group consisting of homopolymers, copolymers and polyblends,
wherein preferably the thermoplastic polymer material of the first powder and/or the thermoplastic polymer material of the second powder comprises a polymer selected from the group consisting of polyetherimides, polycarbonates, polyarylene sulfides, polyarylethersulfones, polyphenylene oxides, polyethersulfones, acrylonitrile-butadienestyrene copolymers, acrylonitrile-styrene-acrylate copolymers (ASA), polyvinyl chloride, polyacrylates, polyesters, polyamides, polyaryletherketones, polyethers, polyurethanes, polyimides, polyamideimides, polysiloxanes, polyolefins and copolymers which have at least two different repeat units of the aforementioned polymers, as well as polymer blends thereof, more preferably a polymer from the class of polyaryletherketones, polyphenylene sulfides, polycarbonates, polyetherimides, polypropylene, polyethylene and polyamides and copolymers and polymer blends thereof,
wherein preferably the thermoplastic polymer material of the first powder and/or the thermoplastic polymer material of the second powder comprises a polyetherketoneketone (PEKK), a polyamide 11 (PA 11), a polyamide 12 (PA 12) or a polyamide 6 (PA 6), in particular the polymer material is polyaryletherketone (PAEK), more preferably selected from the group consisting of polyetheretherketone (PEEK), polyetherketoneketone (PEKK), polyetherketone (PEK), polyetheretherketoneketone (PEEKK), polyetherketoneetherketoneketone (PEKEKK), polyetheretheretherketone (PEEEK), polyetheretherketone-polyether diphenyl ether ketone (PEEK-PEDEK) and copolymers which include at least one of the aforementioned polymers, the polymer material in particular comprises or consists of PEKK,
wherein in the case of polyetherketoneketones (PEKK), which are bonded to two carbonyl groups, at least 10%, preferably 60% and/or at most 70% of the carbonyl groups are in the para-position and otherwise in the meta-position.

5. Powder mixture according to any one of the preceding claims,
wherein the reinforcement material is embedded in the grain of the powder particles of the first powder in such a way that the surface of at least 50% by volume of the powder particles of the first powder are free of reinforcement material which is visible on the surface or can be detected by suitable optical or other analysis methods.

6. Powder mixture according to any one of the preceding claims,
wherein the reinforcement material is selected from the group consisting of:
(a) it comprises or consists of fibers, wherein preferably the fibers are selected from the group consisting of carbon fibers, organic fibers and preferably aramid fibers, inorganic fibers and preferably glass fibers and/or boron fibers and/or wollastonite fibers and/or mineral fibers, and combinations thereof;
(b) it comprises or consists of nanotubes, preferably carbon nanotubes;
(c) it comprises or consists of graphite nanoplatelets and/or fullerenes;
(d) it comprises or consists of platelet-shaped particles, preferably sheet silicate and more preferably mica, (2:1)-trilayer silicates and preferably montmorillonite, hectorite or organophilically modified cation-exchanged trilayer silicates;
(e) it comprises or consists of spherical fillers or irregularly shaped low aspect ratio fillers, preferably inorganic and mineral fillers, preferably glass spheres, hollow glass spheres or quartz powder, talc, calcium carbonate, spherical chalk particles, kaolins, amorphous silicas, silicates, ceramic particles and preferably boron nitride, aluminum oxide, zirconium oxide, silicon dioxide, zirconium(IV) oxide, titanium(IV) oxide, aluminum titanate, barium titanate, silicon carbide (SiC) and boron carbide (B4C), metals and preferably bronze or aluminum powder, dye pigments and preferably titanium dioxide, carbon black and organic fillers, preferably elastomeric filler particles based on EPDM or EPR;
(f) it comprises or consists of flame retardants, in particular flame retardants of the class of inorganic flame retardants, preferably inorganic phosphorus compounds, metal oxides, metal hydroxides, metal salts, boron and zinc compounds, silicon compounds, graphite and/or nitrogen-based flame retardants based on melamine.

7. Powder mixture according to any one of the preceding claims,
wherein the average grain size d50 of the powder particles of the first and/or of the second powder is at least 20 µm, preferably at least 40 µm, more preferably at least 70 µm and/or at most 150 µm, preferably at most 110 µm, more preferably at most 90 µm,
wherein in particular the mean particle size d50 of the first and/or second powder is as follows:
a) 40 to 70 µm for the second powder and/or 40 to 70 µm for the first powder, if the first powder has at least one of the following properties: it is substantially free of microfibers, it comprises spherical reinforcement materials in the micrometer range, it comprises reinforcement materials in the micrometer range with an aspect ratio of less than 3:1, it comprises nanofibers, and/or it comprises reinforcement materials that are in the nanometer range in at least one dimension; and/or
b) 40 to 70 µm for the second powder and/or 70 to 100 µm for the first powder, if the first powder comprises microfibers.

8. Powder mixture according to any one of the preceding claims,
wherein the amount of the second powder is at least 1% by volume, preferably 5% by volume, more preferably 10% by volume, further preferably 15% by volume and particularly preferably 20% by volume and/or at most 70% by volume, preferably at most 60% by volume, more preferably at most 40% by volume and particularly preferably at most 30% by volume, in each case based on the total volume of the powder mixture.

9. Powder mixture according to any one of the preceding claims having one or more of the properties (i) to (iv):
(i) the bulk density is 0.4 to 0.65 g/cm³ , more preferably at least 0.45 or at least 0.5 and/or at most 0.6 g/cm³;
(ii) the BET surface area is <10 m²/g, preferably <5 m²/g, more preferably <3 m²/g and in particular <1 m²/g;
(iii) the MVR value of the second powder is lower or higher than the MVR value of the first powder, in each case determined by the same method, wherein preferably the MVR value of the second powder is 0.1 to 10 times the value of the first powder, more preferably the MVR value of the second powder is 0.25 to 5, further preferably 0.5 to 4, in particular greater than 1 to 3 and very particularly preferably 1.1 to 2 times the value of the first powder,
wherein the MVR value is determined as defined in the description;
(iv) the melting point and/or the extrapolated initial temperature (T_{ei, m}) of the second powder is, to a restricted degree, lower or higher than that of the first powder, preferably lower or higher by at most 30°C, more preferably lower or higher by at most 20°C, particularly preferably by at most 10°C and in particular lower or higher by at most 5°C and very particularly preferably lower or higher by at most 3°C, 2°C or 1°C, very particularly preferably equal or lower as aforesaid,
wherein the melting point is determined in accordance with DIN EN ISO 11357.

10. Method of preparing a powder mixture for the use as a building material for manufacturing a three-dimensional object by solidifying the building material layer by layer at the positions corresponding to the cross-section of the three-dimensional object in the respective layer, in particular by exposure to radiation,
wherein the first powder and the second powder are as defined in any one of the preceding claims and are mixed together in a desired mixing ratio by dry mixing, wherein optionally the first powder and/or the second powder is/are prepared according to any one of the methods (i) to (vii):
(i) by grinding, preferably melt compounding and grinding or cryogenic grinding;
(ii) by melt spraying;
(iii) by precipitation from solvents;
(iv) by melt compounding and melt dispersion;
(v) by melt compounding and by fiber spinning and fiber cutting, wherein after spinning the fibers are optionally stretched to increase the crystalline fraction;
(vi) by coating the polymer onto the filler, or the filler onto the polymer by a mechanical or thermomechanical treatment; or
(vii) by coating the polymer onto the filler, or the filler onto the polymer by spray coating with solvent or spray drying.

11. Method according to claim 10,
wherein the preparation of the first and/or of the second polymer powder includes the steps of melting a polymer material and compounding/incorporating at least one reinforcement material into the melt, preferably the reinforcement material according to claim 6, then either still during this step of compounding/incorporating or after compounding/incorporating, spinning the melt containing the reinforcement material, optionally or preferably stretching the resulting spun fibers, and then granulating or cutting the fibers containing the reinforcement material, and optionally, in order preferably to obtain a particle size characteristic as defined in claim 7 and/or one or more of the properties (i) to (iii) defined in claim 9, subjecting the fibers to a rounding treatment.

12. Method of manufacturing a three-dimensional object by solidifying a building material powder material layer by layer at the positions corresponding to the cross-section of the three-dimensional object in the respective layer, in particular by exposure to radiation,
wherein the building material used is the powder mixture according to any one of claims 1 to 10.

13. Three-dimensional object that has been manufactured by solidifying a pulverulent building material layer by layer at the positions corresponding to the cross-section of the three-dimensional object in the respective layer, in particular by exposure to radiation, wherein the three-dimensional object contains a reinforcement material that is inhomogeneously distributed in at least an inner part or in the entire inner part of the three-dimensional object, obtainable by using the powder mixture according to any one of the preceding claims 1 to 10.

14. Use of a powder mixture according to any one of claims 1 to 9 for enhancing the refreshment rate, improvement of the warpage and/or improvement of the mechanical properties of a three-dimensional object that has been manufactured by solidifying the powder mixture serving as a building material layer by layer at the positions corresponding to the cross-section of the three-dimensional object in the respective layer, in particular by exposure to radiation, wherein in particular at least one of the following modifications (i) to (vii) are obtained:
(i) compared to an object manufactured using only the second powder as the building material, the modulus of elasticity is higher, preferably by at least 10%, more preferably by at least 20% and in particular by at least 30% or even by at least 40% or at least 50%;
(ii) compared to an object manufactured using only the first powder as the building material, the modulus of elasticity is lower by at most 25%, preferably by at most 20%, more preferably by at most 15% and in particular by at most 10%;
(iii) compared to an object manufactured using only the first powder as the building material, the refreshment factor is higher, wherein a higher refreshment factor is preferably **characterized by** a lower number of sink marks.
(iv) compared to an object manufactured using only the first powder as the building material, the preferential direction of the functional additive, preferably of the reinforcement material and in particular of the fibers, is lower and/or the isotropy in the xyz-direction is higher, in particular with respect to the modulus of elasticity;
(v) compared to an object manufactured using only the first powder as the building material, the porosity is lower.
(vi) compared to an object manufactured using only the second powder as the building material, the ultimate tensile strength (UTS) is higher, preferably higher by 5%, more preferably higher by 10% and in particular higher by 15%;
(vii) compared to an object manufactured using only the first powder as the building material, the ultimate tensile strength (UTS) is lower by at most 15%, preferably lower by at most 10%, more preferably lower by at most 5%.
(viii) compared to an object manufactured only from the first powder as building material, the elongation at break is higher, preferably higher by 10%, more preferably higher by 30% and in particular higher by 50% or even higher by 100%.

## Revendications

1. Mélange de poudres pour être utilisé comme matériau de construction pour la fabrication d'un objet tridimensionnel par solidification couche par couche du matériau de construction aux positions correspondant à la section transversale de l'objet tridimensionnel dans la couche respective, en particulier par exposition aux rayonnements,
le mélange de poudres contenant une première poudre et une deuxième poudre,
la première poudre contenant des particules de poudre d'un premier matériau polymère thermoplastique et un matériau de renforcement,
le matériau de renforcement étant au moins partiellement incorporé dans les particules de poudre de la première poudre et/ou adhéré à la surface des particules de poudre de la première poudre,
la deuxième poudre contenant des particules de poudre d'un deuxième matériau polymère thermoplastique, qui est similaire ou différent du premier matériau polymère thermoplastique,
les particules de poudre de la deuxième poudre ne contenant pas le matériau de renforcement ou seulement en une proportion d'au plus 50 % en poids par rapport à la proportion du matériau de renforcement dans ou sur les particules de poudre de la première poudre, et
le mélange de poudres présentant une densité apparente de 0,35 à 0,70 g/cm³.

2. Mélange de poudres selon la revendication 1,
le mélange de poudres étant **caractérisé par** une température de construction la plus basse possible dans un procédé prédéfini pour la fabrication d'un objet tridimensionnel par solidification couche par couche d'un matériau de construction pulvérulent aux positions correspondant à la section transversale de l'objet tridimensionnel dans la couche respective par exposition aux rayonnements, qui est inférieure par rapport à la température de construction la plus basse possible de la première poudre seule, de préférence inférieure de 1 °C, plus préférablement inférieure de 2 °C, en particulier inférieure de 5 °C, la température de construction la plus basse possible étant définie par la température de chambre de processus à laquelle aucun composant n'est précisément arraché par le processus de revêtement (« non-curl temperature », NCT).

3. Mélange de poudres selon l'une quelconque des revendications précédentes,
le mélange de poudres étant **caractérisé par** une fenêtre de processus qui est supérieure ou égale, de préférence supérieure, par rapport à la fenêtre de processus de la première poudre seule,
la fenêtre de processus étant définie comme la différence entre la température de construction la plus haute possible et la température de construction la plus basse possible dans un procédé prédéfini pour la fabrication d'un objet tridimensionnel par solidification couche par couche d'un matériau de construction pulvérulent aux positions correspondant à la section transversale de l'objet tridimensionnel dans la couche respective par exposition aux rayonnements, la température de construction la plus basse possible étant définie par la température de chambre de processus à laquelle aucun composant n'est précisément arraché par le processus de revêtement (« non-curl temperature », NCT).

4. Mélange de poudres selon l'une quelconque des revendications précédentes,
le matériau polymère thermoplastique de la première poudre et/ou le matériau polymère thermoplastique de la deuxième poudre étant un matériau polymère qui est choisi dans le groupe constitué par les homopolymères, les copolymères et les polyblends,
le matériau polymère thermoplastique de la première poudre et/ou le matériau polymère thermoplastique de la deuxième poudre comprenant de préférence un polymère choisi dans le groupe constitué par les polyétherimides, les polycarbonates, les sulfures de polyarylène, les polyaryléthersulfones, oxydes de polyphénylène, les polyéthersulfones, les copolymères d'acrylonitrile-butadiène-styrène, les copolymères d'acrylonitrile-styrène-acrylate (ASA), le polychlorure de vinyle, les polyacrylates, les polyesters, les polyamides, les polyaryléthercétones, les polyéthers, les polyuréthanes, les polyimides, les polyamideimides, les polysiloxanes, les polyoléfines et les copolymères, qui présentent au moins deux unités de répétition différentes des polymères susmentionnés, ainsi que leurs mélanges de polymères, de manière davantage préférée un polymère de la classe des polyaryléthercétones, des sulfures de polyphénylène, des polycarbonates, des polyétherimides, du polypropylène, du polyéthylène et des polyamides et leurs copolymères et mélanges de polymères,
le matériau polymère thermoplastique de la première poudre et/ou le matériau polymère thermoplastique de la deuxième poudre comprenant de préférence une polyéthercétonecétone (PEKK), un polyamide 11 (PA 11), un polyamide 12 (PA 12) ou un polyamide 6 (PA 6), en particulier le matériau polymère étant la polyaryléthercétone (PAEK), de manière davantage préférée étant choisi dans le groupe constitué par la polyétheréthercétone (PEEK), la polyéthercétonecétone (PEKK), la polyéthercétone (PEK), la polyétheréthercétonecétone (PEEKK), la polyéthercétoneéthercétonecétone (PEKEKK), la polyétherétheréthercétone (PEEEK), la polyétheréthercétone-polyétherdiphényléthercétone (PEEK-PEDEK) et les copolymères qui comprennent au moins l'un des polymères susmentionnés, le matériau polymère comprenant en particulier la PEKK ou étant constitué de celle-ci,
dans le cas de la polyéthercétonecétone (PEKK) qui est liée à deux groupes carbonyle, les groupes carbonyle étant en position para à raison d'au moins 10 %, de préférence à raison de 60 % et/ou à raison d'au plus 70 % et par ailleurs en position méta.

5. Mélange de poudres selon l'une quelconque des revendications précédentes,
le matériau de renforcement étant incorporé dans le grain des particules de poudre de la première poudre de telle sorte que la surface d'au moins 50 % en volume des particules de poudre de la première poudre soit exempte de matériau de renforcement visible en surface ou détectable par des procédés d'analyse optiques ou autres appropriés.

6. Mélange de poudres selon l'une quelconque des revendications précédentes,
le matériau de renforcement étant choisi dans le groupe constitué par :
(a) il comprend ou est constitué de fibres, les fibres étant de préférence choisies dans le groupe constitué par les fibres de carbone, les fibres organiques et de préférence les fibres d'aramide, les fibres inorganiques et de préférence les fibres de verre et/ou les fibres de bore et/ou les fibres de wollastonite et/ou les fibres minérales, et leurs combinaisons ;
(b) il comprend ou est constitué de nanotubes, de préférence de nanotubes de carbone ;
(c) il comprend ou est constitué de nanoplaquettes de graphite et/ou de fullerènes ;
(d) il comprend ou est constitué de particules en forme de plaquettes, de préférence de silicate lamellaire et de manière davantage préférée de mica, de silicates à trois couches (2:1) et de préférence de montmorillonite, d'hectorite ou de silicates à trois couches à échange de cations modifiés de manière organophile ;
(e) il comprend ou est constitué de charges sphériques ou de charges de forme irrégulière avec un faible rapport d'aspect, de préférence de charges inorganiques et minérales, de préférence de billes de verre, de billes creuses de verre ou de farine de quartz, de talc, de carbonate de calcium, de particules de craie sphériques, de kaolins, d'acides siliciques amorphes, de silicates, de particules céramiques et de préférence de nitrure de bore, d'oxyde d'aluminium, d'oxyde de zirconium, de dioxyde de silicium, d'oxyde de zirconium (IV), d'oxyde de titane (IV), de titanate d'aluminium, de titanate de baryum, de carbure de silicium (SiC) et de carbure de bore (B4C), de métaux et de préférence de poudre de bronze ou d'aluminium, de pigments colorés et de préférence de dioxyde de titane, de noir de carbone et de charges organiques, de préférence de particules de charge élastomères à base d'EPDM ou d'EPR ;
(f) il comprend ou est constitué d'agents ignifuges, en particulier d'agents ignifuges de la classe des agents ignifuges inorganiques, de préférence des composés phosphorés inorganiques, des oxydes métalliques, des hydroxydes métalliques, des sels métalliques, des composés de bore et de zinc, des composés de silicium, du graphite et/ou des agents ignifuges à base d'azote à base de mélamine.

7. Mélange de poudres selon l'une quelconque des revendications précédentes,
la granulométrie moyenne d₅₀ des particules de poudre de la première et/ou de la deuxième poudre étant d'au moins 20 µm, de préférence d'au moins 40 µm, de manière particulièrement préférée d'au moins 70 µm et/ou d'au plus 150 µm, de préférence d'au plus 110 µm, de manière particulièrement préférée d'au plus 90 µm,
en particulier la taille moyenne des particules d50 de la première et/ou de la deuxième poudre étant la suivante :
a) 40 à 70 µm pour la deuxième poudre et/ou 40 à 70 µm pour la première poudre, dans la mesure où la première poudre présente une ou plusieurs des caractéristiques suivantes : elle est essentiellement exempte de microfibres, elle comprend des matériaux de renforcement sphériques dans la plage micrométrique, elle comprend des matériaux de renforcement de l'ordre du micromètre ayant un rapport d'aspect inférieur à 3:1, elle comprend des nanofibres, et/ou elle comprend des matériaux de renforcement dont au moins une dimension est de l'ordre du nanomètre ; et/ou
b) 40 à 70 µm pour la deuxième poudre et/ou 70 à 100 µm pour la première poudre, dans la mesure où la première poudre comprend des microfibres.

8. Mélange de poudres selon l'une quelconque des revendications précédentes,
la proportion de la deuxième poudre étant d'au moins 1 % en volume, de préférence 5 % en volume, plus préférablement 10 % en volume, encore plus préférablement 15 % en volume et particulièrement préférablement 20 % en volume et/ou d'au plus 70 % en volume, de préférence d'au plus 60 % en volume, plus préférablement d'au plus 40 % en volume et particulièrement préférablement d'au plus 30 % en volume, à chaque fois par rapport au volume total du mélange de poudres.

9. Mélange de poudres selon l'une quelconque des revendications précédentes, présentant une ou plusieurs des propriétés (i) à (iv) :
(i) la densité apparente étant de 0,4 à 0,65 g/cm³, plus préférablement d'au moins 0,45 ou d'au moins 0,5 et/ou d'au plus 0,6 g/cm³ ;
(ii) la surface BET étant < 10 m²/g, de préférence < 5 m²/g, particulièrement préférablement < 3 m²/g et en particulier < 1 m²/g ;
(iii) la valeur MVR de la deuxième poudre étant inférieure ou supérieure à la valeur MVR de la première poudre, à chaque fois déterminée par la même méthode, de préférence la valeur MVR de la deuxième poudre étant de 0,1 à 10 fois la valeur de la première poudre, plus préférablement la valeur MVR de la deuxième poudre étant de 0,25 à 5, particulièrement préférablement de 0,5 à 4, en particulier supérieure à 1 à 3 et de manière tout particulièrement préférée de 1,1 à 2 fois la valeur de la première poudre,
la valeur MVR étant déterminée comme défini dans la description ;
(iv) le point de fusion et/ou la température initiale extrapolée (T_{ei, m}) de la deuxième poudre étant, dans une mesure limitée, inférieure ou supérieure à celle de la première poudre, de préférence inférieure ou supérieure d'au plus 30 °C, particulièrement préférablement inférieure ou supérieure d'au plus 20 °C, en particulier d'au plus 10 °C et particulièrement préférablement d'au plus 5 °C et de manière tout particulièrement préférée d'au plus 3 °C, 2 °C ou 1 °C, de manière tout particulièrement préférée inférieure ou égale à celle indiquée ci-avant,
le point de fusion étant déterminé selon DIN EN ISO 11357.

10. Procédé de préparation d'un mélange de poudres pour être utilisé comme matériau de construction pour la fabrication d'un objet tridimensionnel par solidification couche par couche du matériau de construction aux positions correspondant à la section transversale de l'objet tridimensionnel dans la couche respective, en particulier par exposition aux rayonnements,
la première poudre et la deuxième poudre étant telles que définies dans l'une quelconque des revendications précédentes et étant mélangées l'une avec l'autre dans un rapport de mélange souhaité par mélange à sec, la première poudre et/ou la deuxième poudre étant éventuellement préparées selon l'un quelconque des procédés (i) à (vii) :
(i) par broyage, de préférence mélange à l'état fondu et broyage ou broyage cryogénique ;
(ii) par pulvérisation à l'état fondu ;
(iii) par précipitation à partir de solvants ;
(iv) par mélange à l'état fondu et dispersion à l'état fondu ;
(v) par mélange à l'état fondu et par filage de fibres et coupe de fibres, les fibres étant éventuellement étirées après le filage pour augmenter la proportion cristalline ;
(vi) par revêtement du polymère sur la charge, ou de la charge sur le polymère par un traitement mécanique ou thermomécanique ; ou
(vii) par revêtement du polymère sur la charge, ou de la charge sur le polymère par revêtement par pulvérisation avec un solvant ou séchage par pulvérisation.

11. Procédé selon la revendication 10,
la préparation de la première et/ou de la deuxième poudre polymère comprenant les étapes dans lesquelles un matériau polymère est fondu et au moins un matériau de renforcement, de préférence le matériau de renforcement défini dans la revendication 6, est mélangé/incorporé dans la masse fondue, puis, soit pendant cette étape de mélange/incorporation, soit après le mélange/incorporation, la masse fondue contenant le matériau de renforcement est filée, les fibres filées résultantes sont éventuellement ou de préférence étirées, puis les fibres contenant le matériau de renforcement sont granulées ou coupées et éventuellement, pour obtenir de préférence une caractéristique granulométrique telle que définie dans la revendication 7 et/ou une ou plusieurs des propriétés (i) à (iii) définies dans la revendication 9, sont soumises à un traitement d'arrondi.

12. Procédé de fabrication d'un objet tridimensionnel par solidification couche par couche d'un matériau de construction pulvérulent aux positions correspondant à la section transversale de l'objet tridimensionnel dans la couche respective, en particulier par exposition aux rayonnements,
le mélange de poudres selon l'une quelconque des revendications 1 à 10 étant utilisé en tant que matériau de construction.

13. Objet tridimensionnel qui a été fabriqué par solidification couche par couche d'un matériau de construction pulvérulent aux positions correspondant à la section transversale de l'objet tridimensionnel dans la couche respective, en particulier par exposition aux rayonnements, l'objet tridimensionnel contenant un matériau de renforcement qui est réparti de manière inégale dans au moins une partie intérieure ou dans toute la partie intérieure de l'objet tridimensionnel, pouvant être obtenu par utilisation du mélange de poudres selon l'une quelconque des revendications 1 à 10 précédentes.

14. Utilisation d'un mélange de poudres selon l'une quelconque des revendications 1 à 9 pour augmenter le taux de rafraîchissement, améliorer la déformation et/ou améliorer les propriétés mécaniques d'un objet tridimensionnel qui a été fabriqué par solidification couche par couche du mélange de poudres servant de matériau de construction aux positions correspondant à la section transversale de l'objet tridimensionnel dans la couche respective, en particulier par exposition aux rayonnements, une ou plusieurs des modifications (i) à (vii) suivantes étant en particulier obtenues :
(i) par rapport à un composant qui a été fabriqué uniquement à partir de la deuxième poudre en tant que matériau de construction, le module d'élasticité est supérieur, de préférence supérieur d'au moins 10 %, plus préférablement supérieur d'au moins 20 % et en particulier supérieur d'au moins 30 % ou même supérieur d'au moins 40 % ou supérieur d'au moins 50 % ;
(ii) par rapport à un composant qui a été fabriqué uniquement à partir de la première poudre en tant que matériau de construction, le module d'élasticité est inférieur d'au plus 25 %, de préférence d'au plus 20 %, plus préférablement d'au plus 15 % et en particulier d'au plus 10 % ;
(iii) par rapport à un composant qui a été fabriqué uniquement à partir de la première poudre en tant que matériau de construction, le facteur de rafraîchissement est supérieur, un facteur de rafraîchissement supérieur étant de préférence **caractérisé par** un nombre plus faible de points d'indentation.
(iv) par rapport à un composant qui a été fabriqué uniquement à partir de la première poudre en tant que matériau de construction, la direction préférentielle de l'additif fonctionnel, de préférence du matériau de renforcement et en particulier des fibres, est inférieure et/ou l'isotropie dans la direction xyz est supérieure, en particulier par rapport au module d'élasticité ;
(v) par rapport à un composant qui a été fabriqué uniquement à partir de la première poudre en tant que matériau de construction, la porosité est inférieure.
(vi) par rapport à un composant qui a été fabriqué uniquement à partir de la deuxième poudre en tant que matériau de construction, la résistance maximale à la traction (UTS) est supérieure, de préférence supérieure de 5 %, plus préférablement supérieure de 10 % et en particulier supérieure de 15 % ;
(vii) par rapport à un composant qui a été fabriqué uniquement à partir de la première poudre en tant que matériau de construction, la résistance maximale à la traction (UTS) est inférieure d'au plus 15 %, de préférence inférieure d'au plus 10 %, particulièrement préférablement inférieure d'au plus 5 %.
(viii) par rapport à un composant qui a été fabriqué uniquement à partir de la première poudre en tant que matériau de construction, l'allongement à la rupture est supérieur, de préférence supérieur de 10 %, plus préférablement supérieur de 30 % et en particulier supérieur de 50 % ou même supérieur de 100 %.
